# EUROPEAN PATENT APPLICATION

(11) **EP 4 564 898 A1**
(43) Date of publication of application: **04.06.2025**
(21) Application number: 23851348.5
(22) Date of filing: 06.06.2023
(51) Int. Cl.: H04W 24/10

(54) **COMMUNICATION METHOD AND APPARATUS**

(30) Priority: 08.08.2022 CN 202210946139
(71) Applicant: Huawei Technologies Co., Ltd., Shenzhen, Guangdong 518129 (CN)
(72) Inventor: HAN, Feng, Shenzhen, Guangdong 518129 (CN); MA, Chuan, Shenzhen, Guangdong 518129 (CN); ZHENG, Lili, Shenzhen, Guangdong 518129 (CN); HU, Jinna, Shenzhen, Guangdong 518129 (CN)
(74) Representative: Maiwald GmbH
(86) International application number: PCT/CN2023/098539
(87) International publication number: WO 2024/032120

(57) **Abstract**

A communication method and apparatus are provided. The method includes: A first network device determines first information, where the first information indicates first beam configuration information, and the first beam configuration information includes identifier information of a first beam and periodicity information of the first beam. The first network device sends the first information to a terminal device by using downlink control information DCI and/or a media access control MAC control element CE. According to the technical solutions of this application, in an energy saving state of a base station, beam configuration information may be dynamically adjusted. For example, after the beam configuration information changes, a network device notifies a terminal device of the change of the beam configuration information, and the terminal device may perform beam measurement and reporting based on latest beam configuration information, so that an energy saving requirement of the base station and a performance requirement of the terminal device can be satisfied.

## Description

This application claims priority to Chinese Patent Application No. 202210946139.X, filed with the China National Intellectual Property Administration on August 8, 2022 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

A real-time broadband communication (real-time broadband communication, RTBC) scenario in a future communication system aims to support a large bandwidth and low interaction latency. A goal of the RTBC scenario is to deliver a 10-fold increase in the bandwidth with given latency while meeting specific reliability requirements, providing users with immersive experience when they interact with a virtual world. An extended reality professional (extended reality professional, XR Pro) service having requirements for an ultra-high bandwidth and ultra-low latency poses a more severe challenge to a 5th generation (5th generation, 5G) mobile communication technology. In addition, as a 5G network is deployed to be denser, more antennas, bandwidths, and frequency bands are used. How to improve network energy saving in a 5G system becomes one of main research subjects in the industry.

To support network energy saving, a base station usually needs to include a plurality of configurations for a broadcast common reference signal (for example, a synchronization signal block (synchronization signal block, SSB), or even a channel state information reference signal (channel state information reference signal, CSI-RS)). However, after beam configuration information changes, a terminal device cannot learn of the change, and consequently cannot perform accurate beam measurement and reporting. This finally affects performance of the terminal device.

Therefore, a communication method and apparatus are urgently needed, to enable a network device to quickly notify the terminal device of an adjustment of the beam configuration information, enable the terminal device to perform beam measurement and reporting based on latest beam configuration information, and improve the performance of the terminal device.

### SUMMARY

This application provides a communication method and apparatus, to help a network device quickly notify an adjustment of beam configuration information. For example, after the beam configuration information changes, the network device notifies a terminal device of the change of the beam configuration information, so that the terminal device can perform beam measurement and reporting based on the adjusted beam configuration information, and performance of the terminal device can be improved. Changing of the beam configuration information includes but is not limited to: The network device autonomously adjusts the beam configuration information or the network device obtains the adjusted beam configuration information.

According to a first aspect, a communication method is provided, and includes: A first network device determines first information, where the first information indicates first beam configuration information, and the first beam configuration information includes identifier information of a first beam and periodicity information of the first beam. The first network device sends the first information to a terminal device by using downlink control information (downlink control information, DCI) and/or a media access control (media access control, MAC) control element (control element, CE).

It should be understood that, in this application, "identifier" and another expression like "index" may be interchangeably used. In other words, "identifier information" may also be referred to as "index information" and the like.

According to this solution of this application, a base station may dynamically adjust beam configuration information, and the network device may quickly notify the terminal device of the adjustment of the beam configuration information. Correspondingly, the terminal device may perform beam measurement and reporting based on the changed beam configuration information, so that an energy saving requirement of the base station and a performance requirement of the terminal device can be satisfied.

With reference to the first aspect, in some implementations of the first aspect, the first information includes an index of the first beam configuration information, where the index of the first beam configuration information corresponds to the first beam configuration information. In this way, the first information may indicate an index number by using a small quantity of bits, and the index number may be used to query a preconfiguration or a pre-agreed correspondence between an index number and beam configuration information, to obtain corresponding beam configuration information. Alternatively, in some implementations, the first information includes the identifier information of the first beam and the periodicity information of the first beam. In this way, the network device may directly transmit the beam configuration information by using the first information. This is flexible and efficient. In addition, overheads caused by preconfiguration are also avoided.

With reference to the first aspect, in some implementations of the first aspect, cyclic redundancy check CRC of the DCI and/or the MAC CE is scrambled by using a radio network temporary identifier (radio network temporary identifier, RNTI).

With reference to the first aspect, in some implementations of the first aspect, the method further includes: The first network device sends a plurality of pieces of beam configuration information to the terminal device by using a radio resource control (radio resource control, RRC) message, where the plurality of pieces of beam configuration information are in one-to-one correspondence with indexes of the plurality of pieces of beam configuration information, and the indexes of the plurality of pieces of beam configuration information include the index of the first beam configuration information.

With reference to the first aspect, in some implementations of the first aspect, the method further includes: The first network device sends second information to the terminal device, where the second information includes at least one of the following information: the RNTI, a detection periodicity, an offset slot, a detected symbol, an aggregation level, and a quantity of physical downlink control channel (physical downlink control channel, PDCCH) candidate sets. The second information may be carried in the RRC message, and the aggregation level and the quantity of PDCCH candidate sets may be carried in a same information element. For example, the second information may include one piece of indication information, and the indication information indicates both the aggregation level and the quantity of PDCCH candidate sets. In this way, the terminal device may detect the DCI based on the second information, to obtain the beam configuration information.

With reference to the first aspect, in some implementations of the first aspect, that the first network device sends the first information to a terminal device by using downlink control information DCI and a media access control MAC control element CE includes: The first network device sends a plurality of pieces of beam configuration information to the terminal device by using a radio resource control RRC message, where the plurality of pieces of beam configuration information are in one-to-one correspondence with indexes of the plurality of pieces of beam configuration information, and the indexes of the plurality of pieces of beam configuration information include an index of the first beam configuration information. The first network device sends third information to the terminal device by using the MAC CE, where the third information indicates to activate second beam configuration information, and the second beam configuration information is a subset of the plurality of pieces of beam configuration information. The first network device sends the first information to the terminal device by using the DCI, where the first beam configuration information indicated by the first information belongs to the second beam configuration information. In this way, the beam configuration information may be sent to the terminal device by using both the MAC CE and the DCI.

With reference to the first aspect, in some implementations of the first aspect, the first beam is a beam formed by a synchronization signal block SSB, and the first beam configuration information further includes an SSB index. Alternatively, the first beam is a beam formed by a channel state information reference signal CSI-RS, and the first beam configuration information further includes a CSI-RS resource identifier CSI-RS resource ID or a CSI-RS resource set identifier CSI-RS resource set ID.

With reference to the first aspect, in some implementations of the first aspect, the method further includes: The first network device obtains first capability information of the terminal device, where the first capability information indicates that the terminal device has at least one of the following capabilities: supporting dynamic beam configuration; supporting MAC CE-based dynamic beam configuration; or supporting DCI-based dynamic beam configuration. In this way, the network device may send, to the terminal device based on a beam configuration capability supported by the terminal device, beam configuration information that can be normally used by the network device, to satisfy the performance requirement of the terminal device.

With reference to the first aspect, in some implementations of the first aspect, the method further includes: The first network device sends first capability enquiry information to the terminal device, where the first capability enquiry information indicates the terminal device to report the first capability information of the terminal device.

With reference to the first aspect, in some implementations of the first aspect, the method further includes: The first network device obtains third beam configuration information, where the third configuration information is beam configuration information recommended by the terminal device. The recommended beam configuration information may also be referred to as preferred beam configuration information or expected beam configuration information, and a corresponding English expression may be preferred SSB configuration information. In this way, the network device may determine, based on the beam configuration information recommended by the terminal device, the beam configuration information to be sent to the terminal device. This helps send more accurate beam configuration information to the terminal device, to satisfy the performance requirement of the terminal device.

With reference to the first aspect, in some implementations of the first aspect, the method further includes: The first network device sends first indication information to the terminal device, where the first indication information indicates the terminal device to send the third beam configuration information.

With reference to the first aspect, in some implementations of the first aspect, the method further includes: The first network device sends fourth information to a second network device, where the fourth information indicates the third beam configuration information, and the third beam configuration information is determined based on the first beam configuration information. The fourth information may be completely the same as the first information, or the fourth information may be generated based on the first information. In this way, base stations can learn of respective beam configurations used for beam measurement of terminal devices respectively served by the base stations. In addition, inter-beam load balancing between the base stations can be implemented.

With reference to the first aspect, in some implementations of the first aspect, the first beam configuration information is from the second network device or an operation, administration, and maintenance (operation administration and maintenance, OAM) network element.

With reference to the first aspect, in some implementations of the first aspect, the fourth information is carried in a cell activation request message or a resource status update request message.

With reference to the first aspect, in some implementations of the first aspect, the method further includes: The first network device receives fourth beam configuration information from the second network device, where the fourth beam configuration information indicates beam configuration information applied by the second network device.

According to a second aspect, a communication method is provided, and includes: A terminal device receives first information from a first network device by using downlink control information DCI and/or a media access control MAC control element CE. The terminal device determines first beam configuration information based on the first information, where the first beam configuration information includes identifier information of a first beam and periodicity information of the first beam.

According to this solution of this application, a base station may dynamically adjust beam configuration information, and the network device may quickly notify the terminal device of the adjustment of the beam configuration information. Correspondingly, the terminal device may perform beam measurement and reporting based on the changed beam configuration information, so that an energy saving requirement of the base station and a performance requirement of the terminal device can be satisfied.

With reference to the second aspect, in some implementations of the second aspect, the first information includes an index of the first beam configuration information, where the index of the first beam configuration information corresponds to the first beam configuration information. Alternatively, the first information includes the identifier information of the first beam and the periodicity information of the first beam.

With reference to the second aspect, in some implementations of the second aspect, cyclic redundancy check CRC of the DCI and/or the MAC CE is scrambled by using a radio network temporary identifier RNTI.

With reference to the second aspect, in some implementations of the second aspect, the method further includes: The terminal device receives a radio resource control RRC message from the first network device, where the RRC message includes a plurality of pieces of beam configuration information, the plurality of pieces of beam configuration information are in one-to-one correspondence with indexes of the plurality of pieces of beam configuration information, and the indexes of the plurality of pieces of beam configuration information include the index of the first beam configuration information.

With reference to the second aspect, in some implementations of the second aspect, the method further includes: The terminal device receives second information from the first network device, where the second information includes at least one of the following information: the RNTI, a detection periodicity, an offset slot, a detected symbol, an aggregation level, and a quantity of physical downlink control channel PDCCH candidate sets.

With reference to the second aspect, in some implementations of the second aspect, that a terminal device receives first information from a first network device by using downlink control information DCI and a media access control MAC control element CE includes: The terminal device receives a radio resource control RRC message from the first network device, where the RRC message includes a plurality of pieces of beam configuration information, the plurality of pieces of beam configuration information are in one-to-one correspondence with indexes of the plurality of pieces of beam configuration information, and the indexes of the plurality of pieces of beam configuration information include an index of the first beam configuration information. The terminal device receives the MAC CE from the first network device, where the MAC CE includes third information, the third information indicates to activate second beam configuration information, and the second beam configuration information is a subset of the plurality of pieces of beam configuration information. The terminal device receives the DCI from the first network device, where the DCI includes the first information, and the first beam configuration information indicated by the first information belongs to the second beam configuration information.

With reference to the second aspect, in some implementations of the second aspect, the first beam is a beam formed by a synchronization signal block SSB, and the first beam configuration information further includes an SSB index. Alternatively, the first beam is a beam formed by a channel state information reference signal CSI-RS, and the first beam configuration information further includes a CSI-RS resource identifier CSI-RS resource ID or a CSI-RS resource set identifier CSI-RS resource set ID.

With reference to the second aspect, in some implementations of the second aspect, the method further includes: The terminal device sends first capability information to the first network device, where the first capability information indicates that the terminal device has at least one of the following capabilities: supporting dynamic beam configuration; supporting MAC CE-based dynamic beam configuration; or supporting DCI-based dynamic beam configuration.

With reference to the second aspect, in some implementations of the second aspect, the method further includes: The terminal device sends third beam configuration information to the first network device, where the third configuration information is beam configuration information recommended by the terminal device.

According to a third aspect, a communication method is provided, and includes: A first network device determines activation request information, where the activation request information includes first beam configuration information, the first beam configuration information includes identifier information of a first cell and identifier information of a first beam, and the first beam is a beam of the first cell. The first network device sends the activation request information to a second network device.

According to the technical solutions of this application, when network devices exchange a cell activation request, in addition to an identifier of an activated cell, an identifier of an activated beam may also be indicated. In this way, when some cells are activated, only some specific beams in the cells may be activated, to avoid activating all beams in a cell corresponding to a cell identifier. This facilitates energy saving of a base station.

With reference to the third aspect, in some implementations of the third aspect, the first beam configuration information further includes a periodicity of the first beam.

With reference to the third aspect, in some implementations of the third aspect, that the first network device sends the activation request information to a second network device includes: The first network device sends the activation request information to the second network device via an access and mobility management network element.

With reference to the third aspect, in some implementations of the third aspect, the first beam is a beam formed by a synchronization signal block SSB, and the beam configuration information further includes an SSB index. Alternatively, the first beam is a beam formed by a channel state information reference signal CSI-RS, and the beam configuration information further includes a CSI-RS resource identifier CSI-RS resource ID or a CSI-RS resource set identifier CSI-RS resource set ID.

With reference to the third aspect, in some implementations of the third aspect, the method further includes: The first network device receives configuration update information from the second network device, where the configuration update information includes discovery reference signal configuration information corresponding to a plurality of cells, the plurality of cells are sleeping cells, and the discovery reference signal configuration information corresponding to the plurality of cells includes discovery reference signal configuration information corresponding to the first cell. The discovery reference signal configuration information corresponding to the first cell includes at least one of the following: a periodicity of a discovery reference signal, offset information of the discovery reference signal, duration of the discovery reference signal, and a structure of the discovery reference signal.

With reference to the third aspect, in some implementations of the third aspect, the method further includes: The first network device receives a measurement result from a terminal device. That a first network device determines activation request information includes: The first network device determines the activation request information based on the measurement result.

With reference to the third aspect, in some implementations of the third aspect, the method further includes: The first network device sends, to the terminal device, discovery reference signal configuration information corresponding to a second cell, where the discovery reference signal configuration information corresponding to the second cell is used by the terminal device to perform measurement to obtain the measurement result.

With reference to the third aspect, in some implementations of the third aspect, the method further includes: The first network device obtains second capability information of the terminal device, where the second capability information indicates one or more of the following capability information: supporting SSB based discovery reference signal measurement, supporting primary synchronization signal (primary synchronization signal, PSS) based discovery reference signal measurement, supporting secondary synchronization signal (secondary synchronization signal, SSS) based discovery reference signal measurement, or supporting both the PSS based discovery reference signal measurement and the SSS based discovery reference signal measurement.

With reference to the third aspect, in some implementations of the third aspect, the method further includes: The first network device receives activation response information from the second network device, where the activation response information includes identifier information of a second beam, and the second beam is a beam activated by the second network device.

According to a fourth aspect, a communication method is provided, and includes: A second network device receives activation request information, where the activation request information includes first beam configuration information, the first beam configuration information includes identifier information of a first cell and identifier information of a first beam, and the first beam is a beam of the first cell. The second network device activates the first beam based on the activation request message.

According to the technical solutions of this application, when base stations exchange a cell activation request, in addition to an identifier of an activated cell, an identifier of an activated beam may also be indicated. In this way, when some cells are activated, only some specific beams in the cells may be activated, to avoid activating all beams in a cell corresponding to a cell identifier. This facilitates energy saving of a base station.

With reference to the fourth aspect, in some implementations of the fourth aspect, the first beam configuration information further includes a periodicity of the first beam.

With reference to the fourth aspect, in some implementations of the fourth aspect, that a second network device receives activation request information includes: The second network device receives the activation request information via an access and mobility management network element.

With reference to the fourth aspect, in some implementations of the fourth aspect, the first beam is a beam formed by a synchronization signal block SSB, and the beam configuration information further includes an SSB index. Alternatively, the first beam is a beam formed by a channel state information reference signal CSI-RS, and the beam configuration information further includes a CSI-RS resource identifier CSI-RS resource ID or a CSI-RS resource set identifier CSI-RS resource set ID.

With reference to the fourth aspect, in some implementations of the fourth aspect, the method further includes: The second network device sends configuration update information to a first network device, where the configuration update information includes discovery reference signal configuration information corresponding to a plurality of cells, the plurality of cells are sleeping cells, and the discovery reference signal configuration information corresponding to the plurality of cells includes discovery reference signal configuration information corresponding to the first cell. The discovery reference signal configuration information corresponding to the first cell includes at least one of the following: a periodicity of a discovery reference signal, offset information of the discovery reference signal, duration of the discovery reference signal, and a structure of the discovery reference signal.

With reference to the fourth aspect, in some implementations of the fourth aspect, the method further includes: The second network device sends activation response information to the first network device, where the activation response information includes identifier information of a second beam, and the second beam is a beam activated by the second network device.

According to a fifth aspect, a communication apparatus is provided, and includes: a processing unit, configured to determine first information, where the first information indicates first beam configuration information, and the first beam configuration information includes identifier information of a first beam and periodicity information of the first beam; and a transceiver unit, configured to send the first information to a terminal device by using downlink control information DCI and/or a media access control MAC control element CE.

With reference to the fifth aspect, in some implementations of the fifth aspect, the first information includes an index of the first beam configuration information, where the index of the first beam configuration information corresponds to the first beam configuration information.

With reference to the fifth aspect, in some implementations of the fifth aspect, cyclic redundancy check CRC of the DCI and/or the MAC CE is scrambled by using a radio network temporary identifier RNTI.

With reference to the fifth aspect, in some implementations of the fifth aspect, the transceiver unit is further configured to send a plurality of pieces of beam configuration information to the terminal device by using a radio resource control RRC message, where the plurality of pieces of beam configuration information are in one-to-one correspondence with indexes of the plurality of pieces of beam configuration information, and the indexes of the plurality of pieces of beam configuration information include the index of the first beam configuration information.

With reference to the fifth aspect, in some implementations of the fifth aspect, the transceiver unit is further configured to send second information to the terminal device, where the second information includes at least one of the following information: the RNTI, a detection periodicity, an offset slot, a detected symbol, an aggregation level, and a quantity of physical downlink control channel PDCCH candidate sets. The second information may be carried in the RRC message.

With reference to the fifth aspect, in some implementations of the fifth aspect, the transceiver unit is specifically configured to: send a plurality of pieces of beam configuration information to the terminal device by using a radio resource control RRC message, where the plurality of pieces of beam configuration information are in one-to-one correspondence with indexes of the plurality of pieces of beam configuration information, and the indexes of the plurality of pieces of beam configuration information include an index of the first beam configuration information; send third information to the terminal device by using the MAC CE, where the third information indicates to activate second beam configuration information, and the second beam configuration information is a subset of the plurality of pieces of beam configuration information; and send the first information to the terminal device by using the DCI, where the first beam configuration information indicated by the first information belongs to the second beam configuration information.

With reference to the fifth aspect, in some implementations of the fifth aspect, the first beam is a beam formed by a synchronization signal block SSB, and the first beam configuration information further includes an SSB index. Alternatively, the first beam is a beam formed by a channel state information reference signal CSI-RS, and the first beam configuration information further includes a CSI-RS resource identifier CSI-RS resource ID or a CSI-RS resource set identifier CSI-RS resource set ID.

With reference to the fifth aspect, in some implementations of the fifth aspect, the transceiver unit is further configured to obtain first capability information of the terminal device, where the first capability information indicates that the terminal device has at least one of the following capabilities: supporting dynamic beam configuration; supporting MAC CE-based dynamic beam configuration; or supporting DCI-based dynamic beam configuration.

With reference to the fifth aspect, in some implementations of the fifth aspect, the transceiver unit is further configured to send first capability enquiry information, where the first capability enquiry information indicates the terminal device to report the first capability information of the terminal device.

With reference to the fifth aspect, in some implementations of the fifth aspect, the transceiver unit is further configured to obtain third beam configuration information, where the third configuration information is beam configuration information recommended by the terminal device.

With reference to the fifth aspect, in some implementations of the fifth aspect, the transceiver unit is further configured to send first indication information to the terminal device, where the first indication information indicates the terminal device to send the third beam configuration information.

With reference to the fifth aspect, in some implementations of the fifth aspect, the transceiver unit is further configured to send fourth information to a second network device, where the fourth information indicates the third beam configuration information, and the third beam configuration information is determined based on the first beam configuration information. The fourth information may be completely the same as the first information, or the fourth information may be generated based on the first information.

With reference to the fifth aspect, in some implementations of the fifth aspect, the first beam configuration information is from the second network device or an operation, administration, and maintenance OAM network element.

With reference to the fifth aspect, in some implementations of the fifth aspect, the fourth information is carried in a cell activation request message or a resource status update request message.

With reference to the fifth aspect, in some implementations of the fifth aspect, the transceiver unit is further configured to receive fourth beam configuration information from the second network device, where the fourth beam configuration information indicates beam configuration information applied by the second network device.

According to a sixth aspect, a communication method is provided, and includes: a transceiver unit, configured to receive first information from a first network device by using downlink control information DCI and/or a media access control MAC control element CE; and a processing unit, configured to determine first beam configuration information based on the first information, where the first beam configuration information includes identifier information of a first beam and periodicity information of the first beam.

With reference to the sixth aspect, in some implementations of the sixth aspect, the first information includes an index of the first beam configuration information, where the index of the first beam configuration information corresponds to the first beam configuration information. Alternatively, the first information includes the identifier information of the first beam and the periodicity information of the first beam.

With reference to the sixth aspect, in some implementations of the sixth aspect, cyclic redundancy check CRC of the DCI and/or the MAC CE is scrambled by using a radio network temporary identifier RNTI.

With reference to the sixth aspect, in some implementations of the sixth aspect, the transceiver unit is further configured to receive a radio resource control RRC message from the first network device, where the RRC message includes a plurality of pieces of beam configuration information, the plurality of pieces of beam configuration information are in one-to-one correspondence with indexes of the plurality of pieces of beam configuration information, and the indexes of the plurality of pieces of beam configuration information include the index of the first beam configuration information.

With reference to the sixth aspect, in some implementations of the sixth aspect, the transceiver unit is further configured to receive second information from the first network device, where the second information includes at least one of the following information: the RNTI, a detection periodicity, an offset slot, a detected symbol, an aggregation level, and a quantity of physical downlink control channel PDCCH candidate sets.

With reference to the sixth aspect, in some implementations of the sixth aspect, the transceiver unit is specifically configured to: receive a radio resource control RRC message from the first network device, where the RRC message includes a plurality of pieces of beam configuration information, the plurality of pieces of beam configuration information are in one-to-one correspondence with indexes of the plurality of pieces of beam configuration information, and the indexes of the plurality of pieces of beam configuration information include an index of the first beam configuration information; receive the MAC CE from the first network device, where the MAC CE includes third information, the third information indicates to activate second beam configuration information, and the second beam configuration information is a subset of the plurality of pieces of beam configuration information; and receive the DCI from the first network device, where the DCI includes the first information, and the first beam configuration information indicated by the first information belongs to the second beam configuration information.

With reference to the sixth aspect, in some implementations of the sixth aspect, the first beam is a beam formed by a synchronization signal block SSB, and the first beam configuration information further includes an SSB index. Alternatively, the first beam is a beam formed by a channel state information reference signal CSI-RS, and the first beam configuration information further includes a CSI-RS resource identifier CSI-RS resource ID or a CSI-RS resource set identifier CSI-RS resource set ID.

With reference to the sixth aspect, in some implementations of the sixth aspect, the transceiver unit is further configured to send first capability information to the first network device, where the first capability information indicates that the terminal device has at least one of the following capabilities: supporting dynamic beam configuration; supporting MAC CE-based dynamic beam configuration; or supporting DCI-based dynamic beam configuration.

With reference to the sixth aspect, in some implementations of the sixth aspect, the transceiver unit is further configured to send third beam configuration information to the first network device, where the third configuration information is beam configuration information recommended by the terminal device.

According to a seventh aspect, a communication apparatus is provided, and includes: a processing unit, configured to determine activation request information, where the activation request information includes first beam configuration information, the first beam configuration information includes identifier information of a first cell and identifier information of a first beam, and the first beam is a beam of the first cell; and a transceiver unit, configured to send the activation request information to a second network device.

With reference to the seventh aspect, in some implementations of the seventh aspect, the first beam configuration information further includes a periodicity of the first beam.

With reference to the seventh aspect, in some implementations of the seventh aspect, that a first network device sends the activation request information to the second network device includes: The first network device sends the activation request information to the second network device via an access and mobility management network element.

With reference to the seventh aspect, in some implementations of the seventh aspect, the first beam is a beam formed by a synchronization signal block SSB, and the beam configuration information further includes an SSB index. Alternatively, the first beam is a beam formed by a channel state information reference signal CSI-RS, and the beam configuration information further includes a CSI-RS resource identifier CSI-RS resource ID or a CSI-RS resource set identifier CSI-RS resource set ID.

With reference to the seventh aspect, in some implementations of the seventh aspect, the transceiver unit is configured to receive configuration update information from the second network device, where the configuration update information includes discovery reference signal configuration information corresponding to a plurality of cells, the plurality of cells are sleeping cells, and the discovery reference signal configuration information corresponding to the plurality of cells includes discovery reference signal configuration information corresponding to the first cell. The discovery reference signal configuration information corresponding to the first cell includes at least one of the following: a periodicity of a discovery reference signal, offset information of the discovery reference signal, duration of the discovery reference signal, and a structure of the discovery reference signal.

With reference to the seventh aspect, in some implementations of the seventh aspect, the transceiver unit is further configured to receive a measurement result from a terminal device. That the first network device determines the activation request information includes: The first network device determines the activation request information based on the measurement result.

With reference to the seventh aspect, in some implementations of the seventh aspect, the transceiver unit is further configured to send, to the terminal device, discovery reference signal configuration information corresponding to a second cell, where the discovery reference signal configuration information corresponding to the second cell is used by the terminal device to perform measurement to obtain the measurement result.

With reference to the seventh aspect, in some implementations of the seventh aspect, the transceiver unit is further configured to obtain second capability information of the terminal device, where the second capability information indicates one or more of the following capability information: supporting SSB based discovery reference signal measurement; supporting primary synchronization signal PSS based discovery reference signal measurement or secondary synchronization signal SSS based discovery reference signal measurement; or supporting the PSS based discovery reference signal measurement and the SSS based discovery reference signal measurement.

With reference to the seventh aspect, in some implementations of the seventh aspect, the transceiver unit is further configured to receive activation response information from the second network device, where the activation response information includes identifier information of a second beam, and the second beam is a beam activated by the second network device.

According to an eighth aspect, a communication apparatus is provided, and includes: a transceiver unit, configured to receive activation request information, where the activation request information includes first beam configuration information, the first beam configuration information includes identifier information of a first cell and identifier information of a first beam, and the first beam is a beam of the first cell; and a processing unit, configured to activate the first beam based on the activation request message.

With reference to the eighth aspect, in some implementations of the eighth aspect, the first beam configuration information further includes a periodicity of the first beam.

With reference to the eighth aspect, in some implementations of the eighth aspect, that a second network device receives the activation request information includes: The second network device receives the activation request information via an access and mobility management network element.

With reference to the eighth aspect, in some implementations of the eighth aspect, the first beam is a beam formed by a synchronization signal block SSB, and the beam configuration information further includes an SSB index. Alternatively, the first beam is a beam formed by a channel state information reference signal CSI-RS, and the beam configuration information further includes a CSI-RS resource identifier CSI-RS resource ID or a CSI-RS resource set identifier CSI-RS resource set ID.

With reference to the eighth aspect, in some implementations of the eighth aspect, the transceiver unit is further configured to send configuration update information to a first network device, where the configuration update information includes discovery reference signal configuration information corresponding to a plurality of cells, the plurality of cells are sleeping cells, and the discovery reference signal configuration information corresponding to the plurality of cells includes discovery reference signal configuration information corresponding to the first cell. The discovery reference signal configuration information corresponding to the first cell includes at least one of the following: a periodicity of a discovery reference signal, offset information of the discovery reference signal, duration of the discovery reference signal, and a structure of the discovery reference signal.

With reference to the eighth aspect, in some implementations of the eighth aspect, the transceiver unit is further configured to send activation response information to the first network device, where the activation response information includes identifier information of a second beam, and the second beam is a beam activated by the second network device.

According to a ninth aspect, a communication apparatus is provided, and includes a processor and an interface circuit. The interface circuit is configured to: receive a signal from a communication apparatus other than the communication apparatus and transmit the signal to the processor, or send a signal from the processor to a communication apparatus other than the communication apparatus. The processor is configured to implement the method according to any possible implementation of the first aspect to the fourth aspect by using a logic circuit or executing code instructions.

According to a tenth aspect, a computer-readable storage medium is provided. The computer-readable storage medium stores a computer program or instructions. When the computer program or the instructions are executed, the method according to any possible implementation of the first aspect to the fourth aspect is implemented.

According to an eleventh aspect, a computer program product including instructions is provided. When the instructions are run, the method according to any possible implementation of the first aspect to the fourth aspect is implemented.

According to a twelfth aspect, a computer program is provided. The computer program includes code or instructions. When the code or the instructions are run, the method according to any possible implementation of the first aspect to the fourth aspect is implemented.

According to a thirteenth aspect, a chip system is provided. The chip system includes a processor, further includes a memory, and is configured to implement the method according to any possible implementation of the first aspect to the fourth aspect. The chip system includes a chip, or includes a chip and another discrete component.

According to a fourteenth aspect, a communication system is provided, and includes a first network device and a terminal device.

The first network device is configured to implement the method in the implementations of the first aspect, and the terminal device is configured to implement the method in the implementations of the second aspect.

In a possible design, the communication system further includes another device that interacts with the first network device or the terminal device in the solutions provided in embodiments of this application.

According to a fifteenth aspect, a communication system is provided, and includes a first network device and a second network device.

The first network device is configured to implement the method in the implementations of the third aspect, and the second network device is configured to implement the method in the implementations of the fourth aspect.

In a possible design, the communication system further includes another device that interacts with the first network device or the second network device in the solutions provided in embodiments of this application.

### BRIEF DESCRIPTION OF DRAWINGS

FIG. 1 is a diagram of a communication system to which this application is applicable;
FIG. 2 is a diagram of an SSB periodicity according to an embodiment of this application;
FIG. 3 is a diagram of different beam configuration information according to an embodiment of this application;
FIG. 4 is a diagram of a communication method according to an embodiment of this application;
FIG. 5A and FIG. 5B are a diagram of a specific example of a communication method according to an embodiment of this application;
FIG. 6 is another diagram of a specific example of a communication method according to an embodiment of this application;
FIG. 7 is another diagram of a specific example of a communication method according to an embodiment of this application;
FIG. 8 is another diagram of a communication method according to an embodiment of this application;
FIG. 9 is still another diagram of a specific example of a communication method according to an embodiment of this application;
FIG. 10 is yet another diagram of a specific example of a communication method according to an embodiment of this application;
FIG. 11 is yet another diagram of a specific example of a communication method according to an embodiment of this application;
FIG. 12 is a diagram of a communication device according to this application;
FIG. 13 is a diagram of a communication apparatus according to this application; and
FIG. 14 is a diagram of a structure of a network device according to an embodiment of this application.

### DESCRIPTION OF EMBODIMENTS

The following describes the technical solutions of this application with reference to the accompanying drawings.

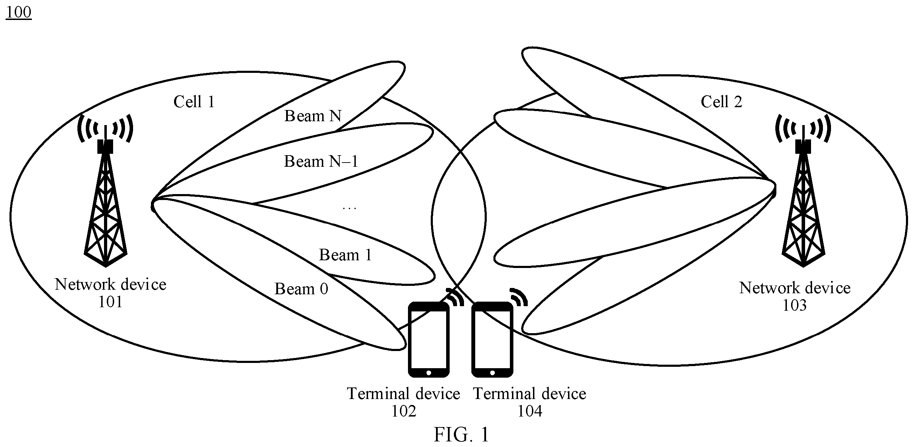

FIG. 1 is a diagram of a communication system 100 to which an embodiment of this application is applicable.

As shown in FIG. 1, the communication system 100 may include one or more network devices, for example, a network device 101 and a network device 103 shown in FIG. 1. The communication system 100 may further include one or more terminal devices (where the terminal device may also be referred to as user equipment (user equipment, UE)), for example, a terminal device 102 and a terminal device 104 shown in FIG. 1. The network device 101 is located in a cell 1, and the network device 103 is located in a cell 2.

It should be understood that FIG. 1 is merely a diagram. The communication system may further include another network device, for example, may further include a core network device 105, and a wireless relay device and a wireless backhaul device that are not shown in FIG. 1. A quantity of network devices and a quantity of terminal devices included in the mobile communication system are not limited in embodiments of this application.

The terminal device in embodiments of this application may also be referred to as user equipment, an access terminal, a subscriber unit, a subscriber station, a mobile station, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future evolved network, or the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that is directly worn on the body or integrated into clothes or an accessory of a user. The wearable device is a hardware device, and implements a powerful function through software support, data exchange, and cloud interaction. In a broad sense, wearable intelligent devices include full-featured and large-sized devices that can implement complete or partial functions without depending on smartphones, such as smart watches or smart glasses, and devices that are dedicated to only one type of application function and need to work with other devices such as smartphones, such as various smart bands or smart jewelry for monitoring physical signs.

In addition, the terminal device may alternatively be a terminal device in an internet of things (internet of things, IoT) system. A technical feature of the IoT is to connect an object to a network by using a communication technology, to implement an intelligent network of human-machine interconnection and object-object interconnection. A specific form of the terminal device is not limited in this application.

It should be understood that, in embodiments of this application, the terminal device may be an apparatus configured to implement a function of the terminal device, or may be an apparatus that can support the terminal device in implementing the function, for example, a chip system. The apparatus may be installed in the terminal. In embodiments of this application, the chip system may include a chip, or may include a chip and another discrete component.

The network device in embodiments of this application may be any device having a wireless transceiver function. The device includes but is not limited to an evolved NodeB (evolved NodeB, eNB), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP) or a transmission and reception point (transmission and reception point, TRP), or the like, or may be a next generation NodeB (next generation NodeB, gNB) in a 5th generation (5th generation, 5G) like new radio (new radio, NR) wireless communication system, a transmission point (TRP or TP), one or a group of (including a plurality of antenna panels) antenna panels of a base station in a 5G system, or a network node that forms a gNB or a transmission point, for example, a baseband unit (BBU) or a distributed unit (distributed unit, DU), or the like.

In some deployments, the gNB may include a central unit (central unit, CU) and a DU. The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The gNB may further include an active antenna unit (active antenna unit, AAU for short). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling like RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

It should be understood that, in embodiments of this application, the network device may be an apparatus configured to implement a function of the network device, or may be an apparatus that can support the network device in implementing the function, for example, a chip system. The apparatus may be installed in the network device.

The technical solutions in embodiments of this application may be applied to service scenarios such as backscatter communication in an NR communication system and passive internet of things communication, and various communication systems, for example, an LTE frequency division duplex (frequency division duplex, FDD) system, LTE time division duplex (time division duplex, TDD), a 5G system, vehicle-to-X (vehicle-to-X, V2X) (the V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like), long term evolution-vehicle (long term evolution-vehicle, LTE-V), an internet of vehicles, machine type communication (machine type communication, MTC), an internet of things (Internet of things, IoT), long term evolution-machine (long term evolution-machine, LTE-M), machine to machine (machine to machine, M2M), device to device (device to device, D2D), or a future evolved communication system, for example, a 6th generation (6th generation, 6G) system.

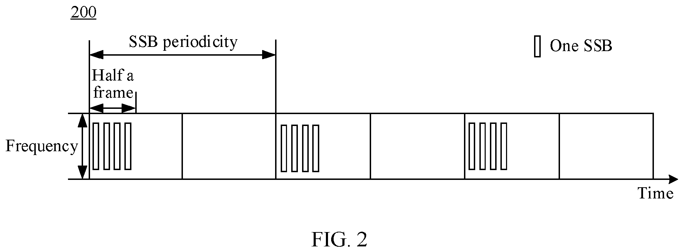

Currently, a wireless design of a 5G air interface is based on beam management, and sending and receiving of all uplink and downlink channels of the 5G air interface are based on beams. A base station transmits a narrow beam to a specific direction at a specific time point, and then changes a direction at a next time point to transmit a narrow beam again. By analogy, all areas can be covered. This process is referred to as beam scanning. In the 5G air interface, used beam measurement reference signals include an uplink beam measurement reference signal and a downlink beam measurement reference signal. The downlink beam measurement reference signal may include a beam formed by a synchronization signal block (synchronization signal block, SSB) and a beam formed by a channel state information reference signal (channel state information reference signal, CSI-RS). For the beam formed by the SSB, an SSB sending moment is in a unit of half a frame (namely, 5 ms), and the SSB is sent at a specific periodicity. Currently, a plurality of SSB formats are defined in an NR system. In half a frame (5 ms) for sending an SSB, a maximum sending quantity of SSBs is related to a frequency. For example, when the frequency of the SSB is less than or equal to 3 GHz, the maximum sending quantity of SSBs is 4. When the frequency of the SSB is greater than 3 GHz and less than or equal to 6 GHz, the maximum sending quantity of SSBs is 8. When the frequency of the SSB is greater than 6 GHz, the maximum sending quantity of SSBs is 34. When the maximum sending quantity of SSBs is 4, a diagram of SSB beam scanning is shown in FIG. 2. A horizontal coordinate is time, and a vertical coordinate is the frequency. In one SSB periodicity, an SSB sending moment is in a unit of half a frame, and four SSBs are sent.

Currently, with development of 5G technologies, users have higher requirements on a network. For example, a real-time broadband communication (real-time broadband communication, RTBC) scenario in a future communication system aims to support a large bandwidth and low interaction latency. A goal of the RTBC scenario is to deliver a 10-fold increase in the bandwidth with given latency while meeting specific reliability requirements, providing the users with immersive experience when they interact with a virtual world. An extended reality professional (extended reality professional, XR Pro) service having requirements for an ultra-high bandwidth and ultra-low latency poses a more severe challenge to a 5th generation (5th generation, 5G) mobile communication technology. In addition, as a 5G network becomes denser, more antennas, a larger bandwidth, and more frequency bands are used. How to improve network energy saving in a 5G system becomes one of main research subjects in the industry.

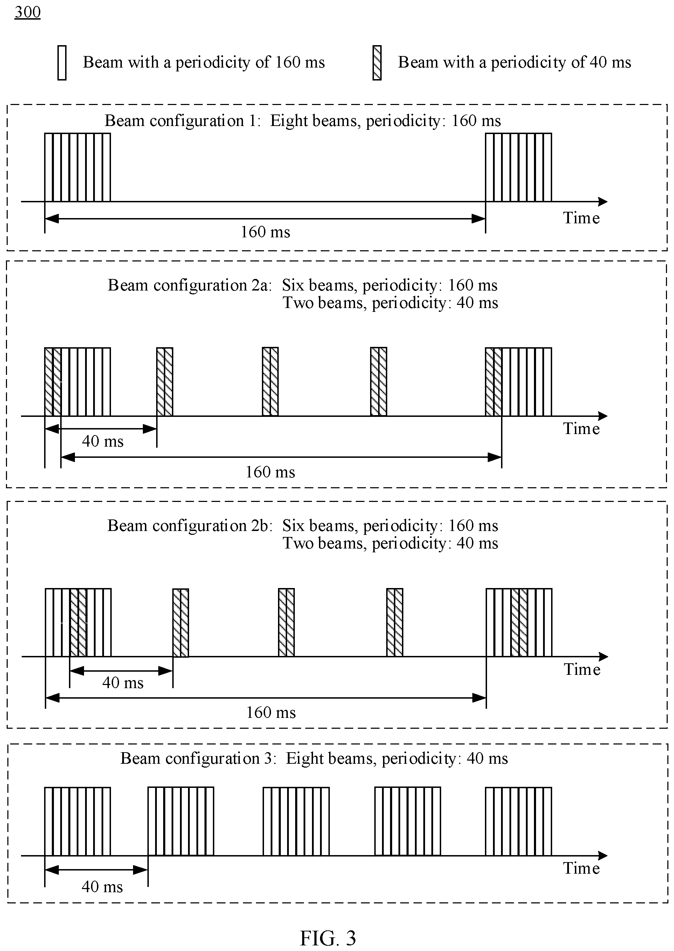

To support the network energy saving, a base station usually needs to include a plurality of configurations for a broadcast common reference signal (for example, a synchronization signal block (synchronization signal block, SSB), or even a channel state information reference signal (channel state information reference signal, CSI-RS)). For example, the base station may classify beams into a fixed beam set and a dynamic (semi-static) beam set. For the fixed beam set, the base station always broadcasts the fixed beam set regardless of whether the base station is in an energy saving mode. For the dynamic (semi-static) beam set, the base station may determine, based on an energy saving state, network load, a quantity of served terminal devices, and the like, whether to broadcast some beams in the beam set. As shown in FIG. 3, beam configuration information 1 includes eight beams, and periodicities of the eight beams are all 160 ms. Beam configuration information 2a and 2b each include eight beams, where periodicities of six beams are 160 ms, and periodicities of two beams are 40 ms. Beam configuration information 3 includes eight beams, and periodicities of the eight beams are all 40 ms. When the base station is in deep sleep, the base station may broadcast a common reference signal based on the beam configuration information 1, and all beams are broadcast in a long periodicity (for example, 160 ms). In this way, the base station has better energy saving effect. When the base station is in light sleep, the base station may broadcast a reference signal based on the beam configuration 2. A long-periodicity beam of the base station may be used by a terminal device in an idle state to perform cell selection, cell reselection, and the like. A short-periodicity beam of the base station may serve a terminal device in a connected state, and may provide a dynamic beam, so that the base station can obtain a more accurate beam measurement result of UE. When the base station is normally enabled, the base station may broadcast a reference signal based on the beam configuration 3. It should be understood that, in the foregoing beam configuration information, the beam configuration information 2a and 2b are merely used as an example. This application is not limited to beam configurations shown in the beam configuration information 2a and 2b. For example, the two short-periodicity beams may be located at any location in the eight beams. For another example, a quantity of short-periodicity beams may be another value (for example, 3 or 4) other than 2.

However, after a base station in an energy saving state dynamically changes beam configuration information of the base station (for example, from the beam configuration 2a to the beam configuration 2b), a terminal device served by the base station cannot learn of the change, and consequently cannot perform accurate beam measurement and reporting. This finally affects performance of the terminal device.

Based on this, this application provides a communication method and apparatus, to quickly notify a terminal device after a base station dynamically adjusts beam configuration information, so that the terminal device can perform beam measurement and reporting based on latest beam configuration information, and performance of the terminal device can be improved.

The following describes the technical solutions of this application in detail by using interaction between a first network device and a terminal device as an example. For example, the terminal device may be the terminal device 102 in FIG. 1, and the first network device may be the network device 101 in FIG. 1.

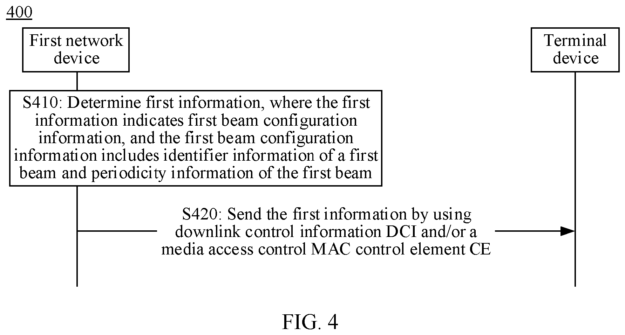

FIG. 4 is a schematic flowchart of a communication method according to this application.

S410: A first network device determines first information, where the first information indicates first beam configuration information, and the first beam configuration information includes identifier information of a first beam and periodicity information of the first beam.

It should be understood that, in this application, "identifier" and another expression like "index" may be replaced with each other. In other words, "identifier information" may also be referred to as "index information" and the like.

In a possible implementation, the first information includes an index of the first beam configuration information, where the index of the first beam configuration information corresponds to the first beam configuration information. In this way, the first information may include a small quantity of bits to indicate an index number, and the index number may be used to query a preconfiguration or a pre-agreed table corresponding to an index number and beam configuration information, to obtain corresponding beam configuration information.

In another possible implementation, the first information includes the identifier information of the first beam and the periodicity information of the first beam. In this way, transmission of the beam configuration information may be performed by using the first information. This is flexible and efficient. Signaling overheads caused by preconfiguration are avoided.

Optionally, the first beam is a beam formed by a synchronization signal block SSB, and the first beam configuration information further includes an SSB index. Alternatively, the first beam is a beam formed by a channel state information reference signal CSI-RS, and the first beam configuration information further includes a CSI-RS resource identifier CSI-RS resource ID or a CSI-RS resource set identifier CSI-RS resource set ID.

Optionally, before determining the first beam configuration information, the first network device may obtain first capability information of a terminal device, where the first capability information indicates that the terminal device has at least one of the following capabilities: supporting dynamic beam configuration; supporting MAC CE-based dynamic beam configuration; or supporting DCI-based dynamic beam configuration. In this way, the network device may send, to the terminal device based on a beam configuration capability supported by the terminal device, beam configuration information that can be normally used by the network device, to satisfy a performance requirement of the terminal device.

Optionally, before the first network device obtains the first capability information of the terminal device, the first network device may send first capability enquiry information to the terminal device, where the first capability enquiry information indicates the terminal device to report the first capability information of the terminal device.

Optionally, before determining the first beam configuration information, the first network device may obtain third beam configuration information, where the third configuration information is beam configuration information recommended by the terminal device. The recommended beam configuration information may also be referred to as preferred beam configuration information or expected beam configuration information, and a corresponding English expression may be preferred SSB configuration information. In this way, the network device may determine, based on the beam configuration information recommended by the terminal device, the beam configuration information to be sent to the terminal device. This helps send more accurate beam configuration information to the terminal device, to satisfy the performance requirement of the terminal device.

Optionally, before the first network device may obtain the third beam configuration information, the first network device sends first indication information to the terminal device, where the first indication information indicates the terminal device to send the third beam configuration information.

S420: The first network device sends the first information to the terminal device by using downlink control information DCI and/or a media access control MAC control element CE.

Optionally, cyclic redundancy check CRC of the DCI and/or the MAC CE is scrambled by using a radio network temporary identifier RNTI. The RNTI may enable a plurality of terminal devices to detect the DCI and/or the MAC CE, to obtain information, for example, the first information, carried in the DCI and/or the MAC CE.

Optionally, the first network device may send a plurality of pieces of beam configuration information to the terminal device by using a radio resource control RRC message, where the plurality of pieces of beam configuration information are in one-to-one correspondence with indexes of the plurality of pieces of beam configuration information, and the indexes of the plurality of pieces of beam configuration information include the index of the first beam configuration information.

Optionally, the first network device may send second information to the terminal device, where the second information includes at least one of the following information: the RNTI, a detection periodicity, an offset slot, a detected symbol, an aggregation level, and a quantity of physical downlink control channel PDCCH candidate sets. The second information may be carried in the RRC message, and the aggregation level and the quantity of PDCCH candidate sets may be carried in a same information element. For example, the second information may include one piece of indication information, and the indication information indicates both the aggregation level and the quantity of PDCCH candidate sets. In this way, the terminal device may detect the DCI based on the second information, to obtain the beam configuration information.

Optionally, that the first network device sends the first information to the terminal device by using downlink control information DCI and a media access control MAC control element CE includes: The first network device sends a plurality of pieces of beam configuration information to the terminal device by using a radio resource control RRC message, where the plurality of pieces of beam configuration information are in one-to-one correspondence with indexes of the plurality of pieces of beam configuration information, and the indexes of the plurality of pieces of beam configuration information include an index of the first beam configuration information. The first network device sends third information to the terminal device by using the MAC CE, where the third information indicates to activate second beam configuration information, and the second beam configuration information is a subset of the plurality of pieces of beam configuration information. The first network device sends the first information to the terminal device by using the DCI, where the first beam configuration information indicated by the first information belongs to the second beam configuration information. In this way, the beam configuration information may be sent to the terminal device by using both the MAC CE and the DCI.

In this embodiment of this application, the first network device may further send fourth information to a second network device, where the fourth information indicates the third beam configuration information, and the third beam configuration information is determined based on the first beam configuration information. The fourth information may be completely the same as the first information, or the fourth information may be generated based on the first information. In this way, base stations can learn of respective beam configurations used for beam measurement of terminal devices respectively served by the base stations. In addition, inter-beam load balancing between the base stations can be implemented.

The first beam configuration information is from the second network device or an operation, administration, and maintenance OAM network element. The fourth information is carried in a cell activation request message or a resource status update request message.

Optionally, the first network device receives fourth beam configuration information from the second network device, where the fourth beam configuration information indicates beam configuration information applied by the second network device.

According to this solution of this application, a base station may dynamically adjust beam configuration information, and the network device may quickly notify the terminal device of the adjustment of the beam configuration information. Correspondingly, the terminal device may perform beam measurement and reporting based on the changed beam configuration information, so that an energy saving requirement of the base station and the performance requirement of the terminal device can be satisfied.

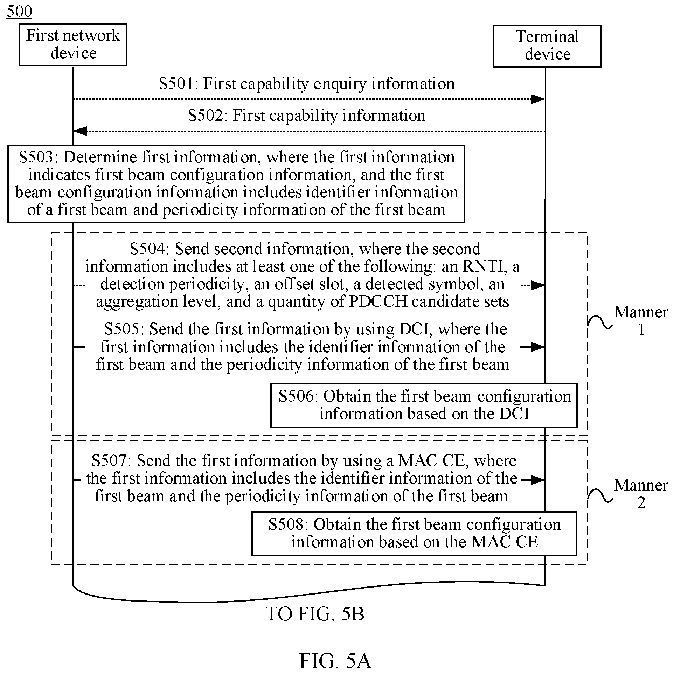

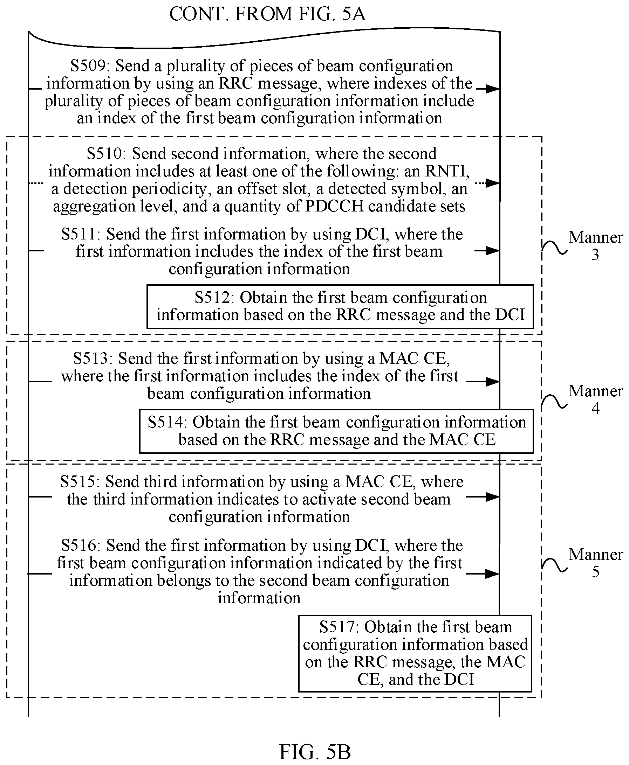

FIG. 5A and FIG. 5B are a diagram of a specific example of a communication method according to an embodiment of this application.

S501: A first network device sends first capability enquiry information to a terminal device.

This step is an optional step. Specifically, the first network device may send terminal device capability enquiry (UE Capability Enquiry) information to the terminal device, where the UE capability enquiry information indicates the terminal device to report first capability information of the terminal device to the first network device.

S502: The first network device receives the first capability information from the terminal device.

This step is an optional step. Specifically, after receiving the first capability enquiry information from the first network device, the terminal device sends the first capability information (UE Capability Information) to the first network device. The first capability information indicates that the terminal device has at least one of the following capabilities: supporting dynamic beam configuration; supporting MAC CE-based dynamic beam configuration; or supporting DCI-based dynamic beam configuration. After obtaining the first capability information of the terminal device, the first network device may determine, based on the first capability information, beam configuration information to be sent to the terminal device.

S503: The first network device determines first information, where the first information indicates first beam configuration information, and the first beam configuration information includes identifier information of a first beam and periodicity information of the first beam.

Specifically, the first network device may determine the first information in a plurality of manners. For example, the first network device autonomously configures the first beam configuration information based on a current network status, to determine the first information. For another example, the first network device may obtain third beam configuration information, where the third beam configuration information is beam configuration information recommended (or expected) by the terminal device. The first network device determines the first configuration information based on the third beam configuration information, to determine the first information. Optionally, before obtaining the third beam configuration information, the first network device may send first indication information to the terminal device, to indicate the terminal device to send the third beam configuration information.

The terminal device may send the third beam configuration information to the first network device in a plurality of manners. In a possible implementation, the terminal device may directly send the third beam configuration information to the first network device. For example, the terminal device sends auxiliary information to the first network device. The auxiliary information includes cell identifier (Cell ID) information, beam identifier information (for example, an SSB index (index)), and beam periodicity information (for example, a broadcast periodicity of the SSB index). That is, the auxiliary information is the third beam configuration information. In another possible implementation, the first network device may send a plurality of pieces of beam configuration information to the terminal device by using an RRC message. Each piece of beam configuration information corresponds to one index. Each of the plurality of pieces of beam configuration information includes cell identifier (Cell ID) information, beam identifier information (for example, an SSB index), and beam periodicity information (for example, a broadcast periodicity of the SSB index). The terminal device sends auxiliary information to the first network device, where the auxiliary information includes an index of the third beam configuration information.

In this embodiment of this application, based on different content included in the first information, the first network device may send the first information to the terminal device in the following plurality of manners:

### Manner 1:

S504: The first network device sends second information, where the second information includes at least one of the following: an RNTI, a detection periodicity, an offset slot, a detected symbol, an aggregation level, and a quantity of physical downlink control channel PDCCH candidate sets.

The second information is used by the terminal device to detect DCI. Specifically, cyclic redundancy check CRC of the DCI is scrambled by using the radio network temporary identifier RNTI. The terminal device may perform blind detection in corresponding search space (search space) based on the RNTI, to obtain the DCI. The detection periodicity indicates a quantity of slots of an interval at which the terminal device detects the search space once. The offset slot indicates an offset slot of the to-be-detected DCI in a periodicity. The detected symbol indicates a symbol detected by the terminal device in a slot. The aggregation level and the quantity of physical downlink control channel PDCCH candidate sets may be carried in a same information element, and indicate a quantity of control channel elements (control channel elements, CCEs) and a quantity of PDCCH sets that are detected by the terminal.

S505: The first network device sends the first information by using the DCI, where the first information includes the identifier information of the first beam and the periodicity information of the first beam.

Specifically, the first network device directly indicates the first information by using the DCI. The first information includes optional identifier information of a first cell (Cell ID), the identifier information of the first beam (for example, the SSB index), and the periodicity information of the first beam (for example, the broadcast periodicity of the SSB index).

By way of example, and not limitation, information or a field of two bits (bits) is used as an example. Table 1 shows a mapping relationship between a cell identifier and a value of a cell identifier field. Table 2 shows a mapping relationship between a value of an identifier field of the first beam and an identifier of the first beam. Table 3 shows a mapping relationship between a value of a periodicity field of the first beam and a periodicity of the first beam.

**Table 1: Mapping relationship between the value of the cell identifier field (using two bits as an example) and the cell identifier**

| Value of the cell identifier field (Value of Cell Index field) | Cell identifier (Cell ID) |
|---|---|
| 00 | 0 |
| 01 | 1 |
| 10 | 2 |
| 11 | 3 |

**Table 2: Mapping relationship between the value of the identifier field (using two bits as an example) of the first beam and the identifier of the first beam**

| Value of the identifier field of the first beam (value of SSB-Index field) | Identifier of the first beam (SSB index) |
|---|---|
| 00 | 0 |
| 01 | 1 |
| 10 | 2 |
| 11 | 3 |

**Table 3: Mapping relationship between the value of the periodicity field (using two bits as an example) of the first beam and the periodicity of the first beam**

| Value of the periodicity of the first beam (value of SSB-periodicity field) | Periodicity information of the first beam (unit: ms) |
|---|---|
| 00 | 5 |
| 01 | 10 |
| 10 | 20 |
| 11 | 40 |

It should be understood that, in Table 1 to Table 3, indicating corresponding information by a field of two bits (bits) is merely a possible implementation. For example, the corresponding information may alternatively be indicated by a field of three bits (bits). Specifically, a value 000 of the cell identifier field (Value of Cell Index field) indicates a cell whose cell identifier (Cell ID) is 0, a value 000 of the identifier field of the first beam (Value of SSB-Index field) indicates that the first beam is a beam whose identifier (SSB index) is 0, a value 000 of the periodicity field of the first beam (value of SSB-periodicity field) indicates that the periodicity of the first beam (SSB-periodicity) is five milliseconds (ms), and so on. In actual application, a person skilled in the art may flexibly configure, based on an actual case (for example, a network load, a quantity of transmission resources, and a quantity of types of indicated information), a quantity of bits (including but not limited to the foregoing two bits or three bits) included in a field, to indicate the corresponding information.

S506: The terminal device obtains the first beam configuration information based on the DCI.

### Manner 2:

S507: The first network device sends the first information to the terminal device by using a MAC CE, where the first information includes the identifier information of the first beam and the periodicity information of the first beam.

Specifically, the first network device directly indicates the first information by using the MAC CE. The first information includes identifier information of a first cell (Cell ID), the identifier information of the first beam (for example, the SSB index), and the periodicity information of the first beam (for example, the broadcast periodicity of the SSB index). Optionally, the first information may further include a bandwidth part (bandwidth part, BWP) index (for example, a BWP ID).

Optionally, Table 4 and Table 5 are example tables of two possible MAC CE command formats. Each MAC CE is identified by a logical channel in a MAC header.

In Table 4, a periodicity index (index) indicates an index corresponding to a periodicity value. For example, 5 ms corresponds to an index 0, 10 ms corresponds to an index 1, 20 ms corresponds to an index 2, and so on, where N is a positive integer greater than 1.

**Table 4: First MAC CE command format**

| Cell identifier (cell ID) | Bandwidth part identifier (BWP ID) |
|---|---|
| Periodicity index (index) corresponding to a beam 0 | |
| Periodicity index (index) corresponding to a beam 1 | |
| ... | |
| Periodicity index (index) corresponding to a beam N | |

In Table 5, C 0 to C 7 are cell identifiers. In the MAC CE command format shown in Table 5, identifier information of a plurality of beams corresponding to each cell in C 0 to C 7 and corresponding periodicity information may be indicated by using the MAC CE, where M is a positive integer greater than 1.

**Table 5: Second MAC CE command format**

| C 7 | C 6 | C 5 | C 4 | C 3 | C 2 | C 1 | C 0 |
|---|---|---|---|---|---|---|---|
| Indexes of a plurality of beams corresponding to a cell 0 and corresponding periodicities | | | | | | | |
| Indexes of a plurality of beams corresponding to a cell 1 and corresponding periodicities | | | | | | | |
| ... | | | | | | | |
| Indexes of a plurality of beams corresponding to a cell M and corresponding periodicities | | | | | | | |

It should be understood that the foregoing MAC CE commands shown in Table 4 and Table 5 are merely examples, and should not be used as a limitation on the technical solutions of this application.

S508: The terminal device obtains the first beam configuration information based on the MAC CE.

In both the foregoing two manners (the manner 1 and the manner 2), the first information directly indicates (or includes) the first beam configuration information. This is flexible and efficient, and preconfiguration is not needed. The following describes three manners in which the first information indirectly indicates the first beam configuration information.

S509: The first network device sends a plurality of pieces of beam configuration information to the terminal device by using an RRC message, where the plurality of pieces of beam configuration information are in one-to-one correspondence with indexes of the plurality of pieces of beam configuration information, and the indexes of the plurality of pieces of beam configuration information include an index of the first beam configuration information.

Step S509 needs to be performed in the following three manners. To be specific, the plurality of pieces of beam configuration information and the indexes of the plurality of pieces of beam configuration information that are in one-to-one correspondence with the plurality of pieces of beam configuration information are preconfigured by using the RRC message in the following three manners.

### Manner 3:

S510: A second network device sends second information, where the second information includes at least one of the following: an RNTI, a detection periodicity, an offset slot, a detected symbol, an aggregation level, and a quantity of physical downlink control channel PDCCH candidate sets.

Optionally, the second information may be carried in the RRC message in step S509.

For specific content included in the second information, refer to step S504. For brevity, details are not described herein again.

S511: The first network device sends the first information by using DCI, where the first information includes the index of the first beam configuration information.

By way of example, and not limitation, a field of two bits is used as an example. Table 6 shows a mapping relationship between a field value of the first beam configuration information and the index of the first beam configuration information.

**Table 6: Mapping relationship between the field value (using two bits as an example) of the first beam configuration information and the index of the first beam configuration information**

| Value of the first beam configuration information (value of SSB configuration index field) | Index of the first beam configuration information |
|---|---|
| 00 | 0 |
| 01 | 1 |
| 10 | 2 |
| 11 | 3 |

It should be understood that, in Table 6, indicating corresponding information by a field of two bits (bits) is merely a possible implementation. For example, the corresponding information may alternatively be indicated by a field of three bits (bits). Specifically, a value 000 of the first beam configuration information (value of SSB configuration index field) indicates that the index of the first beam configuration information is 0. In actual application, a person skilled in the art may flexibly configure, based on an actual case (for example, a network load, a quantity of transmission resources, and a quantity of types of indicated information), a quantity of bits (including but not limited to the foregoing two bits or three bits) included in a field, to indicate the corresponding information.

S512: The terminal device obtains the first beam configuration information based on the RRC message and the DCI.

### Manner 4:

S513: The first network device sends the first information to the terminal device by using a MAC CE, where the first information includes the index of the first beam configuration information.

S514: The terminal device obtains the first beam configuration information based on the RRC message and the MAC CE.

In the foregoing two manners (the manner 3 and the manner 4), the first beam configuration information is indirectly indicated by the first information. In this way, the first information may include a small quantity of bits to indicate an index number, and the index number may be used to query a preconfiguration or a pre-agreed table corresponding to an index number and beam configuration information, to obtain corresponding beam configuration information. This facilitates energy saving of the network device.

### Manner 5:

S515: The first network device sends third information to the terminal device by using a MAC CE, where the third information indicates to activate second beam configuration information.

Specifically, the third information may indicate to activate a beam configuration information set (for example, the second beam configuration information), and the beam configuration information set includes a part or all of pieces of beam configuration information in a set including the plurality of pieces of beam configuration information in step S509. That is, the second beam configuration information is a subset of the set including the plurality of pieces of beam configuration information in step S509.

Optionally, the third information may alternatively indicate to deactivate a beam configuration information set. In this way, a set of remaining beam configuration information obtained by removing the deactivated beam configuration information set from a set including the plurality of pieces of beam configuration information in step S509 is the second beam configuration information.

S516: The first network device sends the first information to the terminal device by using DCI, where the first beam configuration information indicated by the first information belongs to the second beam configuration information.

S517: The terminal device obtains the first beam configuration information based on the RRC message, the MAC CE, and the DCI.

In this way, the MAC CE and the DCI jointly take effect to indicate the first beam configuration information to the terminal device, so that the terminal device can be quickly notified after the beam configuration information changes. This helps improve performance of the terminal device.

It should be understood that the foregoing descriptions are all based on an example in which the first beam is a beam formed by an SSB. However, this should not be construed as a limitation on the technical solutions of this application. For example, the first beam may alternatively be a beam formed by a CSI-RS. In this case, the SSB index may be replaced with a CSI-RS resource identifier CSI-RS resource ID or a CSI-RS resource set identifier CSI-RS resource set ID.

It should be further understood that when the first network device sends the first information by using the DCI and/or the MAC CE, a plurality of terminal devices each may detect the DCI and/or the MAC CE, to obtain information, for example, the first information, carried in the DCI and/or the MAC CE.

According to this solution of this application, a base station may dynamically adjust beam configuration information, and the network device may quickly notify the terminal device of the adjustment of the beam configuration information. Correspondingly, the terminal device may perform beam measurement and reporting based on the changed beam configuration information, so that an energy saving requirement of the base station and a performance requirement of the terminal device can be satisfied.

The foregoing describes a manner of exchanging the beam configuration information between the first network device and the terminal device. In embodiments of this application, the first network device may further exchange beam configuration information with the second network device, to further implement the energy saving of the network device.

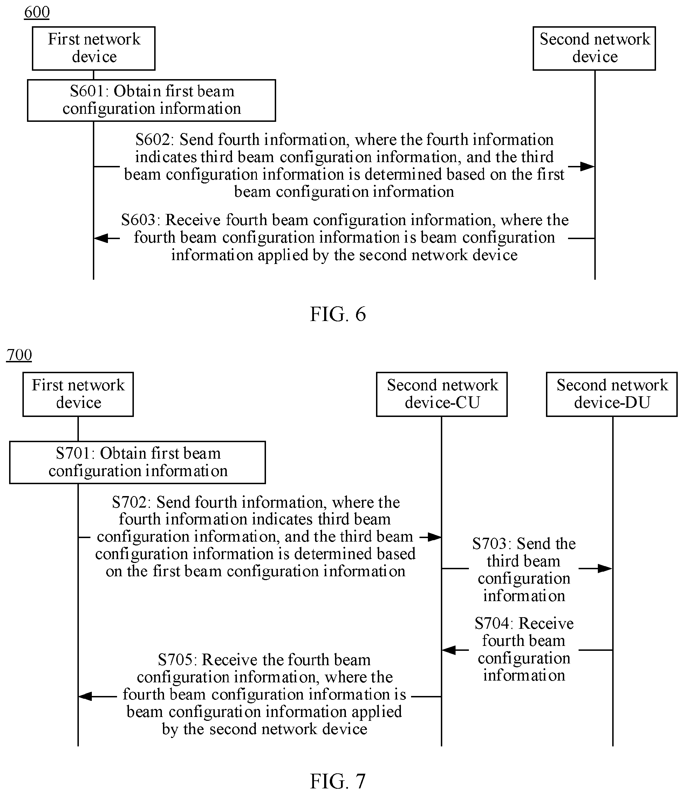

FIG. 6 is another diagram of a specific example of a communication method according to an embodiment of this application. The technical solution in FIG. 6 may be performed based on the technical solution in FIG. 5A and FIG. 5B.

S601: A first network device obtains first beam configuration information.

Specifically, the first network device may obtain the first beam configuration information in a plurality of manners. This is not limited in this application. For example, the first network device may receive the first beam configuration information from a second network device. For another example, the first network device may obtain the first beam configuration information from an operation, administration, and maintenance OAM network element.

Optionally, regardless of whether the first network device obtains the first beam configuration information from the second network device or obtains the first beam configuration information from the OAM, reference may be made to the manners described in FIG. 5A and FIG. 5B. In other words, the first network device may obtain one piece of information, where the information may indicate the first beam configuration information, or may indirectly indicate the first beam configuration information. For details, refer to the descriptions in FIG. 5A and FIG. 5B. For brevity, details are not described herein again.

S602: The first network device sends fourth information to the second network device, where the fourth information indicates third beam configuration information, and the third beam configuration information is determined based on the first beam configuration information or a measurement result of UE.

The fourth information includes identifier information of a fourth beam and periodicity information of the fourth beam, and the fourth information is carried in a cell activation request message or a resource status update request message.

In a possible implementation, the fourth information may be completely the same as first information. In other words, the third beam configuration information is the same as the first beam configuration information. In another possible implementation, the fourth information may be different from first information. To be specific, the third beam configuration information is obtained by the first network device through further processing based on the first beam configuration information. The further processing may be explained as follows: In comparison with the first beam configuration information, the third beam configuration information includes more or less information.

In a possible implementation, the third beam configuration information is used to request beam configuration information used when the second network device is enabled.

S603: The first network device receives fourth beam configuration information from the second network device, where the fourth beam configuration information is beam configuration information applied by the second network device.

Specifically, the first network device may receive a response message from the second network device, where the response message includes the beam configuration information applied by the second network device, namely, the fourth beam configuration information. The fourth beam configuration information may be the same as or different from the third beam configuration information. This is not limited in this application.

According to this technical solution of this application, network devices can learn of respective beam configurations used for beam measurement of terminal devices respectively served by the network devices. In addition, inter-beam load balancing between the network devices can be implemented.

FIG. 7 is another diagram of a specific example of a communication method according to an embodiment of this application. The method shown in FIG. 7 is the same as the method shown in FIG. 6, and a difference lies in that a second network device is a CU/DU split network device.

S701: Obtain first configuration information.

S701 is the same as step S601. For brevity, details are not described herein again.

S702: A first network device sends fourth information to the second network device, where the fourth information indicates third beam configuration information, and the third beam configuration information is determined based on the first beam configuration information.

S702 is the same as step S602. For brevity, details are not described herein again.

S703: A second network device-CU sends the third beam configuration information to a second network device-DU.

Specifically, the second network device-CU sends the third beam configuration information to the second network device-DU by using an F1 message.

S704: The second network device-CU receives fourth beam configuration information from the second network device-DU.

Specifically, the second network device-CU receives the fourth beam configuration information from the second network device-DU by using an F1 message, where the fourth beam configuration information is beam configuration information applied by the second network device-DU.

S705: The first network device receives the fourth beam configuration information from the second network device, where the fourth beam configuration information is beam configuration information applied by the second network device.

S705 is the same as step S603. For brevity, details are not described herein again.

According to this technical solution disclosed in this application, network devices can learn of respective beam configurations used for beam measurement of terminal devices respectively served by the network devices. In addition, inter-beam load balancing between the network devices can be implemented.

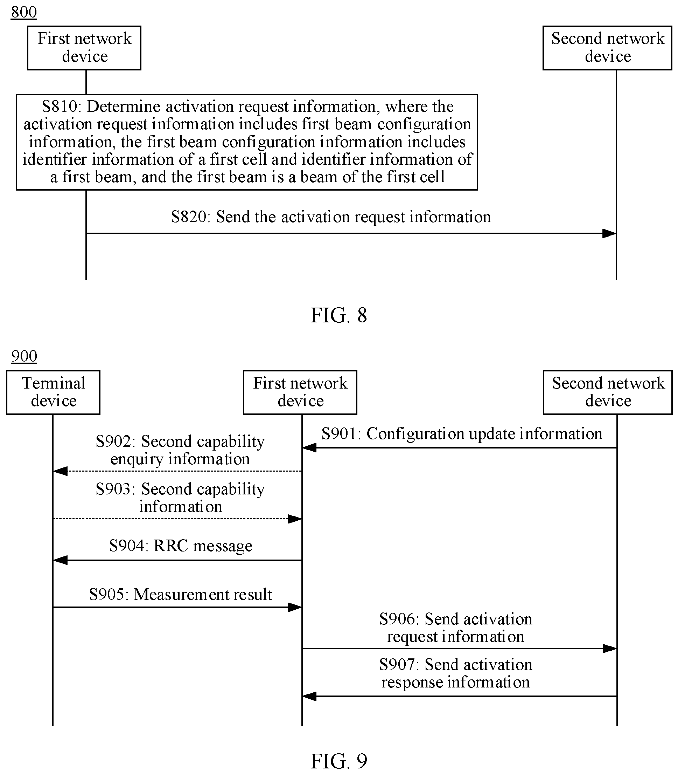

FIG. 8 is another diagram of a communication method according to an embodiment of this application. The method is performed by a first network device and a second network device. The first network device may be the network device 101 shown in FIG. 1, and the second network device may be the network device 103 shown in FIG. 1.

S810: The first network device determines activation request information, where the activation request information includes first beam configuration information, the first beam configuration information includes identifier information of a first cell and identifier information of a first beam, and the first beam is a beam of the first cell.

Optionally, the first beam configuration information may further include a periodicity of the first beam. The first beam is a beam formed by a synchronization signal block SSB, and the beam configuration information further includes an SSB index. Alternatively, the first beam is a beam formed by a channel state information reference signal CSI-RS, and the beam configuration information further includes a CSI-RS resource identifier CSI-RS resource ID or a CSI-RS resource set identifier CSI-RS resource set ID.

Optionally, the first network device may receive configuration update information from the second network device, where the configuration update information includes discovery reference signal configuration information corresponding to a plurality of cells, the plurality of cells are sleeping cells, and the discovery reference signal configuration information corresponding to the plurality of cells includes discovery reference signal configuration information corresponding to the first cell. In a possible implementation, the discovery reference signal configuration information may be configured in a unit of a discovery reference signal. In this way, the discovery reference signal configuration information corresponding to the first cell includes at least one of the following: a periodicity of the discovery reference signal, offset information of the discovery reference signal, duration of the discovery reference signal, and a structure of the discovery reference signal. In another possible implementation, the discovery reference signal configuration information may alternatively be configured in a unit of a beam. In this way, the discovery reference signal configuration information corresponding to the first cell may include at least one of the following: identifier information of the beam, periodicity information of the identifier information of the beam, duration of the identifier information of the beam, and a structure of a discovery reference signal.

Optionally, the first network device may receive a measurement result from a terminal device, and determine the activation request information based on the measurement result.

Optionally, before the first network device may receive the measurement result from the terminal device, the first network device sends, to the terminal device, discovery reference signal configuration information corresponding to a second cell, where the discovery reference signal configuration information corresponding to the second cell is used by the terminal device to perform measurement to obtain the measurement result.

Optionally, before the first network device sends, to the terminal device, the discovery reference signal configuration information corresponding to the second cell, the first network device may further obtain second capability information of the terminal device, and determine, based on the second capability information of the terminal device, the discovery reference signal configuration information to be sent to the terminal device. The second capability information indicates one or more of the following capability information: supporting SSB based discovery reference signal measurement; supporting primary synchronization signal PSS based discovery reference signal measurement or secondary synchronization signal SSS based discovery reference signal measurement; or supporting the PSS based discovery reference signal measurement and the SSS based discovery reference signal measurement.

S820: The first network device sends the activation request information to the second network device.

Optionally, the first network device may send the activation request information to the second network device via an access and mobility management network element.

Optionally, the first network device may further receive activation response information from the second network device, where the activation response information includes identifier information of a second beam, and the second beam is a beam activated by the second network device.

According to this technical solution disclosed in this application, when base stations exchange a cell activation request, in addition to an identifier of an activated cell, an identifier of an activated beam may also be indicated. In this way, when some cells are activated, only some specific beams in the cells may be activated, to avoid activating all beams in the cells. This facilitates energy saving of the base station.

FIG. 9 is still another diagram of a specific example of a communication method according to an embodiment of this application. A first network device may be the network device 101 shown in FIG. 1, a second network device may be the network device 103 shown in FIG. 1, and a terminal device may be the terminal device 102 shown in FIG. 1 that communicates with the network device 101. The first network device and the second network device perform signaling transmission through an Xn interface.

S901: The first network device receives configuration update information from the second network device.

Specifically, the first network device may receive the configuration update information (NG-RAN Configuration Update) from the second network device, where the configuration update information includes discovery reference signal configuration information corresponding to a plurality of cells, the plurality of cells are sleeping cells, and the discovery reference signal configuration information corresponding to the plurality of cells includes discovery reference signal configuration information corresponding to a first cell. In a possible implementation, the discovery reference signal configuration information may be configured in a unit of a discovery reference signal. In this way, the discovery reference signal configuration information corresponding to the first cell includes at least one of the following: a periodicity of the discovery reference signal (a broadcast periodicity of a discovery signal, representing a measurement repetition periodicity), offset information of the discovery reference signal (representing a start subframe of the discovery signal in the periodicity), duration of the discovery reference signal (discovery signal duration, representing duration of the discovery signal), and a structure of the discovery reference signal. In another possible implementation, the discovery reference signal configuration information may alternatively be configured in a unit of a beam. In this way, the discovery reference signal configuration information corresponding to the first cell may include at least one of the following: identifier information of the beam (SSB index), periodicity information of the identifier information of the beam (a broadcast periodicity of the SSB index, representing a measurement repetition periodicity), duration of the identifier information of the beam (SSB Index Duration, representing duration of the SSB index, where for example, the duration is represented in a unit of a symbol), and a structure of a discovery reference signal.

For example, the structure of the discovery reference signal may be: The discovery reference signal includes only a PSS, includes only an SSS, includes only a PSS and an SSS and has no physical broadcast channel (physical broadcast channel, PBCH), or is a complete SSB.

S902: The first network device sends second capability enquiry information to the terminal device.

This step is an optional step.

Specifically, the first network device may send the second capability enquiry (UE Capability Enquiry) information to the terminal device, where the UE capability enquiry information indicates the terminal device to report second capability information of the terminal device to the first network device.

S903: The first network device receives the second capability information of the terminal device.

This step is an optional step.

Specifically, the second capability information (UE Capability Information) indicates one or more of the following capability information: supporting SSB based discovery reference signal measurement; supporting primary synchronization signal PSS based discovery reference signal measurement or secondary synchronization signal SSS based discovery reference signal measurement; or supporting the PSS based discovery reference signal measurement and the SSS based discovery reference signal measurement. The second capability information is used by the first network device to determine discovery reference signal configuration information to be sent to the terminal device.

S904: The first network device sends an RRC message to the terminal device.

Specifically, the first network device sends, to the terminal device by using the RRC message (RRC Reconfiguration), discovery reference signal configuration information corresponding to a neighboring cell, where the neighboring cell includes a second cell.

S905: The first network device receives a measurement result from the terminal device.

Specifically, the terminal device performs measurement based on discovery reference signal configuration information corresponding to the second cell, to obtain the measurement result (Measurement Result).

S906: The first network device sends activation request information to the second network device.

Specifically, the activation request information (Cell Activation Request) includes first beam configuration information, where the first beam configuration information includes identifier information of the first cell and identifier information of a first beam, and the first beam is a beam of the first cell.

The first beam configuration information may be obtained by the first network device based on the measurement result reported by the terminal device in S905.

Optionally, the first beam configuration information may further include a periodicity of the first beam. The first beam is a beam formed by a synchronization signal block SSB, and the beam configuration information further includes an SSB index. Alternatively, the first beam is a beam formed by a channel state information reference signal CSI-RS, and the beam configuration information further includes a CSI-RS resource identifier CSI-RS resource ID or a CSI-RS resource set identifier CSI-RS resource set ID.

S907: The first network device receives activation response information from the second network device.

The activation response information (Cell Activation Response) includes identifier information of a second beam, where the second beam is a beam activated by the second network device.

Optionally, the second beam may be the same as the first beam, or may be different from the first beam. This is not limited in this application.

According to this technical solution disclosed in this application, when base stations exchange a cell activation request, in addition to an identifier of an activated cell, an identifier of an activated beam may also be indicated. In this way, when some cells are activated, only some specific beams in the cells may be activated, to avoid activating all beams in the cells. This facilitates energy saving of the base station.

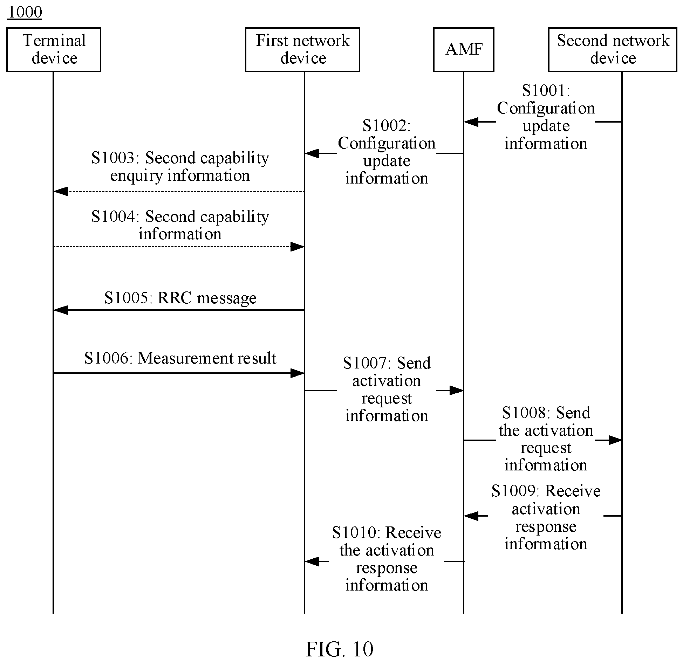

FIG. 10 is yet another diagram of a specific example of a communication method according to an embodiment of this application. FIG. 10 shows a process in which a first network device and a second network device perform signaling transmission through an NG interface between the first network device or the second network device and an access and mobility management function (access and mobility management function, AMF) network element. The method in FIG. 10 may include at least one AMF, and a function of the AMF is transparent transmission.

S1001: The second network device sends configuration update information to the AMF.

S1002: The AMF sends the configuration update information to the first network device.

In S1001 and S1002, the second network device sends the configuration update information (UL RAN Configuration Transfer) to the AMF through the NG interface, and the AMF sends the configuration update information (DL RAN Configuration Transfer) to the first network device through the NG interface. For specific content included in the configuration update information, refer to step S901 in FIG. 9. For brevity, details are not described herein again.

S1003: The first network device sends second capability enquiry information to a terminal device.

S1004: The first network device receives second capability information of the terminal device.

S1005: The first network device sends an RRC message to the terminal device.

S1006: The first network device receives a measurement result from the terminal device.

For S1003 to S1006, refer to steps S902 to S905 shown in FIG. 9. For brevity, details are not described herein again.

S1007: The first network device sends activation request information to the AMF.

S1008: The AMF sends the activation request information to the second network device.

In S 1007 and S1008, the first network device sends the activation request information (UL RAN Configuration Transfer) to the AMF through the NG interface, and the AMF sends the activation request information (DL RAN Configuration Transfer) to the second network device through the NG interface. For specific content included in the activation request information, refer to step S906 shown in FIG. 9. For brevity, details are not described herein again.

S1009: The second network device sends activation response information to the AMF.

S1010: The AMF sends the activation response information to the first network device.

In S1009 and S1010, the second network device sends the activation response information (UL RAN Configuration Transfer) to the AMF through the NG interface, and the AMF sends the activation response information (DL RAN Configuration Transfer) to the second network device through the NG interface. For specific content included in the activation response information, refer to step S907 shown in FIG. 9. For brevity, details are not described herein again.

According to this technical solution of this application, when base stations exchange a cell activation request, in addition to an identifier of an activated cell, an identifier of an activated beam may also be indicated. In this way, when some cells are activated, only some specific beams in the cells may be activated, to avoid activating all beams in the cells. This facilitates energy saving of the base station.

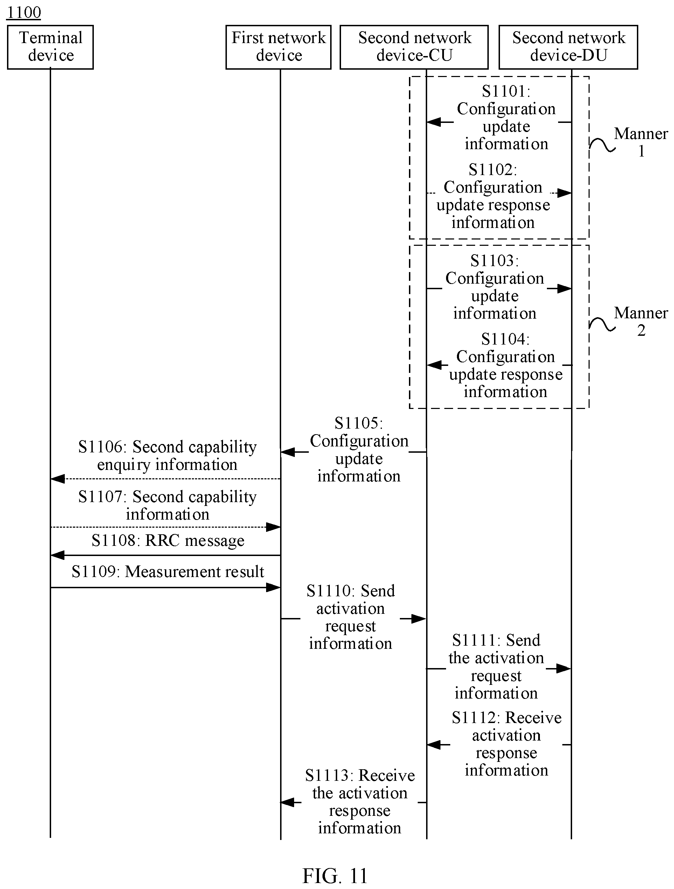

FIG. 11 is yet another diagram of a specific example of a communication method according to an embodiment of this application. FIG. 11 shows a process in which a second network device is a CU/DU split network device, and a second network device-CU and a second network device-DU perform information transmission by using an F1 message.

In this embodiment, the second network device-CU or the second network device-DU may determine that some cells enter a sleep mode (or a sleep state), to notify the other side of discovery reference signal configuration information of the cells that enter the sleep mode (or the sleep state). There are two specific manners:

### Manner 1:

S1101: The second network device-CU receives configuration update information from the second network device-DU.

Specifically, the second network device-DU may determine that some cells enter the sleep mode (or the sleep state), and send the configuration update information to the second network device-CU by using an F1 message (gNB-DU Configuration Update), where the configuration update information includes discovery reference signal configuration information of the cells that enter the sleep mode (or the sleep state). For specific content included in the discovery reference signal configuration information, refer to step S901 in FIG. 9. For brevity, details are not described herein again.

S1102: The second network device-CU sends configuration update response information to the second network device-DU.

Specifically, the second network device-CU sends the configuration update response information to the second network device-DU by using an F1 message (gNB-DU Configuration Update), to indicate that the configuration update information has been received.

### Manner 2:

S1103: The second network device-CU sends configuration update information to the second network device-DU.

Specifically, the second network device-CU may determine that some cells enter the sleep mode (or the sleep state), and notify the second network device-DU of a list of the to-be-disabled (to-be-deactivated) cells by using an F1 message (gNB-CU Configuration Update), where the list includes identifier information of a plurality of cells.

S1104: The second network device-CU receives configuration update response information from the second network device-DU.

Specifically, the second network device-DU sends the configuration update response information to the second network device-CU by using an F1 message (gNB-CU Configuration Update). The configuration update response information includes discovery reference signal configuration information corresponding to a plurality of cells, where the plurality of cells are to-be-disabled (to-be-deactivated) cells, and the discovery reference signal configuration information corresponding to the plurality of cells includes discovery reference signal configuration information corresponding to a first cell. In a possible implementation, the discovery reference signal configuration information may be configured in a unit of a discovery reference signal. In this way, the discovery reference signal configuration information corresponding to the first cell includes at least one of the following: a periodicity of the discovery reference signal (a broadcast periodicity of a discovery signal, representing a measurement repetition periodicity), offset information of the discovery reference signal (representing a start subframe of the discovery signal in the periodicity), duration of the discovery reference signal (discovery signal duration, representing duration of the discovery signal), and a structure of the discovery reference signal. In another possible implementation, the discovery reference signal configuration information may alternatively be configured in a unit of a beam. In this way, the discovery reference signal configuration information corresponding to the first cell may include at least one of the following: identifier information of the beam (SSB index), periodicity information of the identifier information of the beam (a broadcast periodicity of the SSB index, representing a measurement repetition periodicity), duration of the identifier information of the beam (SSB Index Duration, representing duration of the SSB index, where for example, the duration is represented in a unit of a symbol), and a structure of a discovery reference signal. For example, the structure of the discovery reference signal may be: The discovery reference signal includes only a PSS, includes only an SSS, includes only a PSS and an SSS and has no PBCH, or is a complete SSB.

S1105: A first network device receives the configuration update information from the second network device-CU.

For step S1105, refer to step S901 in FIG. 9. For brevity, details are not described herein again.

S1106: The first network device sends second capability enquiry information to a terminal device.

S1107: The first network device receives second capability information of the terminal device.

S1108: The first network device sends an RRC message to the terminal device.

S1109: The first network device receives a measurement result from the terminal device.

For steps S1106 to S1109, refer to steps S902 to S905 shown in FIG. 9. For brevity, details are not described herein again.

S1110: The first network device sends activation request information to the second network device-CU.

For step S1110, refer to step S906 in FIG. 9. For brevity, details are not described herein again.

S1111: The second network device-CU sends the activation request information to the second network device-DU.

Specifically, the second network device-CU sends the activation request information to the second network device-DU by using an F1 message (gNB-CU Configuration Update). For specific content of the activation request message, refer to step S906 in FIG. 9. For brevity, details are not described herein again.

S1112: The second network device-CU receives activation request response information from the second network device-DU.

Specifically, the second network device-CU receives the activation request response information from the second network device-DU by using an F1 message (gNB-CU Configuration Update), where the activation request response information includes identifier information of a second beam, and the second beam is a beam activated by the second network device.

Optionally, the second beam may be the same as a first beam, or may be different from the first beam. This is not limited in this application.

S1113: The first network device receives the activation request response information from the second network device-CU.

For step S1113, refer to step S1112. For brevity, details are not described herein again.

According to this technical solution disclosed in this application, when base stations exchange a cell activation request, in addition to an identifier of an activated cell, an identifier of an activated beam may also be indicated. In this way, when some cells are activated, only some specific beams in the cells may be activated, to avoid activating all beams in the cells. This facilitates energy saving of the base station.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that, in the foregoing embodiments of this application, a method implemented by a communication device may be alternatively implemented by a component (for example, a chip or a circuit) that can be disposed inside the communication device.

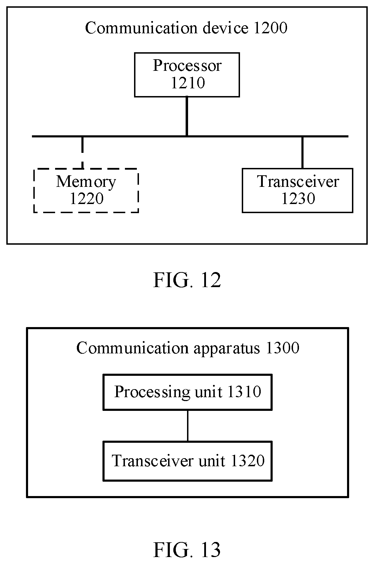

The following describes in detail a communication apparatus provided in embodiments of this application with reference to FIG. 12 and FIG. 13. It should be understood that descriptions of an apparatus embodiment correspond to the descriptions of the method embodiments. Therefore, for content that is not described in detail, refer to the foregoing method embodiments. For brevity, some content is not described again.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. Descriptions are provided below by using an example in which each functional module is obtained through division based on each corresponding function.

FIG. 12 is a block diagram of a communication device 1200 according to this application. Any device in any one of the method 400 to the method 1100, for example, the first network device, the terminal device, or the second network device, may be implemented by the communication device shown in FIG. 12.

It should be understood that the communication device 1200 may be a physical device, a component (for example, an integrated circuit or a chip) of the physical device, or may be a functional module in the physical device.

As shown in FIG. 12, the communication device 1200 includes one or more processors 1210. Optionally, the processor 1210 may invoke an interface to implement receiving and sending functions. The interface may be a logical interface or a physical interface. This is not limited. For example, the interface may be a transceiver circuit, an input/output interface, or an interface circuit. The transceiver circuit, the input/output interface, or the interface circuit that is configured to implement the receiving and sending functions may be separated, or may be integrated together. The transceiver circuit or the interface circuit may be configured to read and write code/data, or the transceiver circuit or the interface circuit may be configured to transmit or transfer a signal.

Optionally, the interface may be implemented through a transceiver. Optionally, the communication device 1200 may further include a transceiver 1230. The transceiver 1230 may also be referred to as a transceiver unit, a transceiver machine, a transceiver circuit, or the like, and is configured to implement a transceiver function.

Optionally, the communication device 1200 may further include a memory 1220. A specific deployment location of the memory 1220 is not specifically limited in this embodiment of this application. The memory may be integrated into the processor, or may be independent of the processor. When the communication device 1200 does not include a memory, the communication device 1200 only needs to have a processing function, and the memory may be deployed at another location (for example, a cloud system).

The processor 1210, the memory 1220, and the transceiver 1230 communicate with each other through an internal connection path, to transfer a control signal and/or a data signal.

It may be understood that, although not shown, the communication device 1200 may further include another apparatus, for example, an input apparatus, an output apparatus, or a battery.

Optionally, in some embodiments, the memory 1220 may store execution instructions used to perform the method in embodiments of this application. The processor 1210 may execute the instructions stored in the memory 1220 and complete, in combination with other hardware (for example, the transceiver 1230), the steps performed in the following methods. For a specific working process and beneficial effects, refer to the descriptions in the foregoing method embodiments.

The methods disclosed in embodiments of this application may be applied to the processor 1210, or may be implemented by the processor 1210. The processor 1210 may be an integrated circuit chip and has a signal processing capability. In an implementation process, the steps of the method may be performed through a hardware integrated logic circuit in the processor or by using instructions in a form of software. The foregoing processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory (random access memory, RAM), a flash memory, a read-only memory (read-only memory, ROM), a programmable read-only memory, an electrically erasable programmable memory, or a register. The storage medium is located in the memory, and a processor reads instructions in the memory and completes the steps in the foregoing methods in combination with hardware of the processor.

It may be understood that the memory 1220 may be a volatile memory or a non-volatile memory, or may include both a volatile memory and a non-volatile memory. The non-volatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, and may serve as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory in the system and the method described in this specification includes but is not limited to these memories and any memory of another proper type.

FIG. 13 is a block diagram of a communication apparatus 1300 according to this application.

Optionally, a specific form of the communication apparatus 1300 may be a general-purpose computer device or a chip in the general-purpose computer device. This is not limited in this embodiment of this application. As shown in FIG. 13, the communication apparatus includes a processing unit 1310 and a transceiver unit 1320.

Specifically, the communication apparatus 1300 may be any device in this application, and may implement a function that can be implemented by the device. It should be understood that the communication apparatus 1300 may be a physical device, a component (for example, an integrated circuit or a chip) of the physical device, or may be a functional module in the physical device.

In a possible design, the communication apparatus 1300 may be the first network device in the foregoing method embodiments, or may be a chip configured to implement a function of the first network device in the foregoing method embodiments.

In an example, the communication apparatus is configured to perform an action performed by the first network device in FIG. 4, the transceiver unit 1320 is configured to perform S420, and the processing unit 1310 is configured to perform S410.

For example, the processing unit 1310 is configured to determine first information, where the first information indicates first beam configuration information, and the first beam configuration information includes identifier information of a first beam and periodicity information of the first beam. The transceiver unit 1320 is configured to send the first information to a terminal device by using downlink control information DCI and/or a media access control MAC control element CE.

Optionally, the first information includes an index of the first beam configuration information, where the index of the first beam configuration information corresponds to the first beam configuration information.

Optionally, cyclic redundancy check CRC of the DCI and/or the MAC CE is scrambled by using a radio network temporary identifier RNTI.

Optionally, the transceiver unit 1320 is further configured to send a plurality of pieces of beam configuration information to the terminal device by using a radio resource control RRC message, where the plurality of pieces of beam configuration information are in one-to-one correspondence with indexes of the plurality of pieces of beam configuration information, and the indexes of the plurality of pieces of beam configuration information include the index of the first beam configuration information.

Optionally, the transceiver unit 1320 is further configured to send second information to the terminal device, where the second information includes at least one of the following information: the RNTI, a detection periodicity, an offset slot, a detected symbol, an aggregation level, and a quantity of physical downlink control channel PDCCH candidate sets. The second information may be carried in the RRC message.

Optionally, the transceiver unit 1320 is specifically configured to: send a plurality of pieces of beam configuration information to the terminal device by using a radio resource control RRC message, where the plurality of pieces of beam configuration information are in one-to-one correspondence with indexes of the plurality of pieces of beam configuration information, and the indexes of the plurality of pieces of beam configuration information include an index of the first beam configuration information; send third information to the terminal device by using the MAC CE, where the third information indicates to activate second beam configuration information, and the second beam configuration information is a subset of the plurality of pieces of beam configuration information; and send the first information to the terminal device by using the DCI, where the first beam configuration information indicated by the first information belongs to the second beam configuration information.

Optionally, the first beam is a beam formed by a synchronization signal block SSB, and the first beam configuration information further includes an SSB index. Alternatively, the first beam is a beam formed by a channel state information reference signal CSI-RS, and the first beam configuration information further includes a CSI-RS resource identifier CSI-RS resource ID or a CSI-RS resource set identifier CSI-RS resource set ID.

Optionally, the transceiver unit 1320 is further configured to obtain first capability information of the terminal device, where the first capability information indicates that the terminal device has at least one of the following capabilities: supporting dynamic beam configuration; supporting MAC CE-based dynamic beam configuration; or supporting DCI-based dynamic beam configuration.

Optionally, the transceiver unit 1320 is further configured to send first capability enquiry information, where the first capability enquiry information indicates the terminal device to report the first capability information of the terminal device.

Optionally, the transceiver unit 1320 is further configured to obtain third beam configuration information, where the third configuration information is beam configuration information recommended by the terminal device.

Optionally, the transceiver unit 1320 is further configured to send first indication information to the terminal device, where the first indication information indicates the terminal device to send the third beam configuration information.

Optionally, the transceiver unit 1320 is further configured to send fourth information to a second network device, where the fourth information indicates the third beam configuration information, and the third beam configuration information is determined based on the first beam configuration information. The fourth information may be completely the same as the first information, or the fourth information may be generated based on the first information.

Optionally, the first beam configuration information is from the second network device or an operation, administration, and maintenance OAM network element.

Optionally, the fourth information is carried in a cell activation request message or a resource status update request message.

Optionally, the transceiver unit 1320 is further configured to receive fourth beam configuration information from the second network device, where the fourth beam configuration information indicates beam configuration information applied by the second network device.

Optionally, the communication apparatus 1300 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments, and for brevity, details are not described herein.

In another possible design, the communication apparatus 1300 may be the terminal device in the foregoing method embodiments, or may be a chip configured to implement a function of the terminal device in the foregoing method embodiments.

In an example, the communication apparatus is configured to perform an action performed by the terminal device in FIG. 4, and the transceiver unit 1320 is configured to perform S420.

For example, the transceiver unit 1320 is configured to receive first information from a first network device by using downlink control information DCI and/or a media access control MAC control element CE. The processing unit 1310 is configured to determine first beam configuration information based on the first information, where the first beam configuration information includes identifier information of a first beam and periodicity information of the first beam.

Optionally, the first information includes an index of the first beam configuration information, where the index of the first beam configuration information corresponds to the first beam configuration information. Alternatively, the first information includes the identifier information of the first beam and the periodicity information of the first beam.

Optionally, cyclic redundancy check CRC of the DCI and/or the MAC CE is scrambled by using a radio network temporary identifier RNTI.

Optionally, the transceiver unit 1320 is further configured to receive a radio resource control RRC message from the first network device, where the RRC message includes a plurality of pieces of beam configuration information, the plurality of pieces of beam configuration information are in one-to-one correspondence with indexes of the plurality of pieces of beam configuration information, and the indexes of the plurality of pieces of beam configuration information include the index of the first beam configuration information.

Optionally, the transceiver unit 1320 is further configured to receive second information from the first network device, where the second information includes at least one of the following information: the RNTI, a detection periodicity, an offset slot, a detected symbol, an aggregation level, and a quantity of physical downlink control channel PDCCH candidate sets.

Optionally, the transceiver unit 1320 is specifically configured to: receive a radio resource control RRC message from the first network device, where the RRC message includes a plurality of pieces of beam configuration information, the plurality of pieces of beam configuration information are in one-to-one correspondence with indexes of the plurality of pieces of beam configuration information, and the indexes of the plurality of pieces of beam configuration information include an index of the first beam configuration information; receive the MAC CE from the first network device, where the MAC CE includes third information, the third information indicates to activate second beam configuration information, and the second beam configuration information is a subset of the plurality of pieces of beam configuration information; and receive the DCI from the first network device, where the DCI includes the first information, and the first beam configuration information indicated by the first information belongs to the second beam configuration information.

Optionally, the first beam is a beam formed by a synchronization signal block SSB, and the first beam configuration information further includes an SSB index. Alternatively, the first beam is a beam formed by a channel state information reference signal CSI-RS, and the first beam configuration information further includes a CSI-RS resource identifier CSI-RS resource ID or a CSI-RS resource set identifier CSI-RS resource set ID.

Optionally, the transceiver unit 1320 is further configured to send first capability information to the first network device, where the first capability information indicates that the terminal device has at least one of the following capabilities: supporting dynamic beam configuration; supporting MAC CE-based dynamic beam configuration; or supporting DCI-based dynamic beam configuration.

Optionally, the transceiver unit 1320 is further configured to send third beam configuration information to the first network device, where the third configuration information is beam configuration information recommended by the terminal device.

It should be further understood that when the communication apparatus 1300 is the terminal device, the transceiver unit 1320 in the communication apparatus 1300 may be implemented by using a communication interface (for example, a transceiver or an input/output interface), for example, may correspond to the communication interface 1130 shown in FIG. 11. The processing unit 1310 in the communication apparatus 1300 may be implemented by using at least one processor, for example, may correspond to the processor 1110 shown in FIG. 11.

Optionally, the communication apparatus 1300 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments, and for brevity, details are not described herein.

In addition, in this application, the communication apparatus 1300 is presented in a form of a functional module. The "module" herein may be an application-specific integrated circuit ASIC, a circuit, a processor that executes one or more software or firmware programs and a memory, an integrated logic circuit, and/or another component that can provide the foregoing functions. In a simple embodiment, a person skilled in the art may figure out that the apparatus 1300 may be in a form shown in FIG. 13. The processing unit 1310 may be implemented by using the processor 1110 shown in FIG. 11. Optionally, if the computer device shown in FIG. 11 includes the memory 1130, the processing unit 1310 may be implemented by using the processor 1110 and the memory 1130. The transceiver unit 1320 may be implemented by using the transceiver 1130 shown in FIG. 11. The transceiver 1130 includes a receiving function and a sending function. Specifically, the processor is implemented by executing a computer program stored in the memory. Optionally, when the apparatus 1300 is a chip, a function and/or an implementation process of the transceiver unit 1320 may alternatively be implemented by using a pin, a circuit, or the like. Optionally, the memory may be a storage unit in the chip, for example, a register or a cache. The storage unit may alternatively be a storage unit that is in the communication apparatus and that is located outside the chip, for example, the memory 1130 shown in FIG. 11, or may be a storage unit deployed in another system or device but not in the computer device.

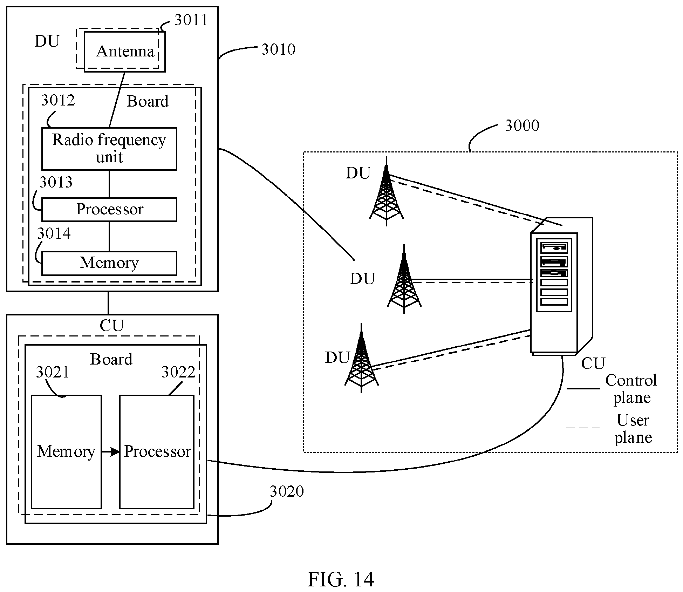

FIG. 14 is a diagram of a structure of a network device according to an embodiment of this application, for example, may be a diagram of a structure of a base station.

The base station 3000 may be used in the system shown in FIG. 1, and perform a function of the first network device or the second network device in the foregoing method embodiments. As shown in the figure, the base station 3000 may include one or more DUs 3010 and one or more CUs 3020. The CU 3020 may communicate with an NG core (next generation core, NC). The DU 3010 may include at least one antenna 3011, at least one radio frequency unit 3012, at least one processor 3013, and at least one memory 3014. The DU 3010 is mainly configured to: receive or send a radio frequency signal, perform conversion between a radio frequency signal and a baseband signal, and perform partial baseband processing. The CU 3020 may include at least one processor 3022 and at least one memory 3021. The CU 3020 and the DU 3010 may communicate with each other through an interface. A control plane (control plane, CP) interface may be Fs-C, for example, F1-C, and a user plane (user plane, UP) interface may be Fs-U, for example, F1-U.

The CU 3020 is mainly configured to: perform baseband processing, control the base station, and the like. The DU 3010 and the CU 3020 may be physically disposed together, or may be physically disposed separately. That is, the base station is a distributed base station. The CU 3020 is a control center of the base station, or may be referred to as a processing unit. The CU 3020 is mainly configured to implement a baseband processing function. For example, the CU 3020 may be configured to control the base station to perform an operation procedure related to the access network device in the foregoing method embodiments.

Specifically, baseband processing of the CU and the DU may be divided based on a protocol layer of a wireless network. For example, functions of a PDCP layer and a protocol layer above the PDCP layer are set on the CU, and functions of protocol layers below the PDCP layer, such as an RLC layer and a MAC layer, are set on the DU. For another example, the CU implements functions of an RRC layer and a PDCP layer, and the DU implements functions of an RLC layer, a MAC layer, and a PHY layer.

In addition, optionally, the base station 3000 may include one or more radio frequency units (radio frequency units, RUs), one or more DUs, and one or more CUs. The DU may include at least one processor 3013 and at least one memory 3014. The RU may include at least one antenna 3011 and at least one radio frequency unit 3012. The CU may include at least one processor 3022 and at least one memory 3021.

In an instance, the CU 3020 may include one or more boards, and a plurality of boards may jointly support a radio access network (for example, a 5G network) of a single access standard, or may separately support radio access networks (for example, an LTE network, a 5G network, or another network) of different access standards. The memory 3021 and the processor 3022 may serve one or more boards. In other words, a memory and a processor may be disposed on each board. Alternatively, a plurality of boards may share a same memory and a same processor. In addition, a necessary circuit may further be disposed on each board. The DU 3010 may include one or more boards, and a plurality of boards may jointly support a radio access network (for example, a 5G network) of a single access standard, or may separately support radio access networks (for example, an LTE network, a 5G network, or another network) of different access standards. The memory 3014 and the processor 3013 may serve one or more boards. In other words, a memory and a processor may be disposed on each board. Alternatively, a plurality of boards may share a same memory and a same processor. In addition, a necessary circuit may further be disposed on each board.

It should be understood that the base station 3000 shown in FIG. 14 can implement processes related to the network device in the method embodiments shown in FIG. 4 to FIG. 11. The operations and/or the functions of the modules in the base station 3000 are separately for implementing corresponding procedures in the foregoing method embodiment. For details, refer to the descriptions in the foregoing method embodiments. To avoid repetition, detailed descriptions are properly omitted herein.

It should be understood that the base station 3000 shown in FIG. 14 is merely a possible architecture of the network device, and should not constitute any limitation on this application. The method provided in this application is applicable to a network device in another architecture, for example, a network device including a CU, a DU, and an AAU. A specific architecture of the network device is not limited in this application.

Various aspects or features of this application may be implemented as methods, apparatuses, or products using standard programming and/or engineering techniques. For example, the computer-readable medium may include but is not limited to: a magnetic storage component (for example, a hard disk, a floppy disk or a magnetic tape), an optical disc (for example, a compact disc (compact disc, CD) and a digital versatile disc (digital versatile disc, DVD)), a smart card and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to various other media that can store, contain and/or carry instructions and/or data.

According to the methods provided in embodiments of this application, this application further provides a computer program product. The computer program product includes a computer program or a group of instructions. When the computer program or the group of instructions are run on a computer, the computer is enabled to perform the method in any one of the embodiments shown in FIG. 4 and FIG. 11.

According to the methods provided in embodiments of this application, this application further provides a computer-readable storage medium. The computer-readable medium stores a program or a group of instructions. When the program or the group of instructions are run on a computer, the computer is enabled to perform the method in any one of the embodiments shown in FIG. 4 and FIG. 11.

According to the method provided in embodiments of this application, this application further provides a communication system. The communication system includes the foregoing apparatus or device.

Terms such as "component", "module", and "system" used in this specification indicate computer-related entities, hardware, firmware, combinations of hardware and software, software, or software being executed. For example, a component may be, but is not limited to, a process that is run on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from the foregoing various computer-readable media that store various data structures. The components may communicate by using a local and/or remote process and according to, for example, a signal having one or more data packets (for example, data from two components interacting with another component in a local system, a distributed system, and/or across a network like the Internet interacting with other systems by using the signal).

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be further understood that numbers "first", "second", and the like are introduced in embodiments of this application only to distinguish between different objects, for example, distinguish between different "information", "devices", or "units". Understanding of a specific object and a correspondence between different objects should be determined based on functions and internal logic of the specific object, and should not constitute any limitation on an implementation process of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again. The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, by a first network device, first information, wherein the first information indicates first beam configuration information, and the first beam configuration information comprises identifier information of a first beam and periodicity information of the first beam; and
sending, by the first network device, the first information to a terminal device by using downlink control information DCI and/or a media access control MAC control element CE.

2. The method according to claim 1, wherein the first information comprises an index of the first beam configuration information, and the index of the first beam configuration information corresponds to the first beam configuration information; or
the first information comprises the identifier information of the first beam and the periodicity information of the first beam.

3. The method according to claim 1 or 2, wherein cyclic redundancy check CRC of the DCI and/or the MAC CE is scrambled by using a radio network temporary identifier RNTI.

4. The method according to any one of claims 1 to 3, wherein the method further comprises:
sending, by the first network device, a plurality of pieces of beam configuration information to the terminal device by using a radio resource control RRC message, wherein the plurality of pieces of beam configuration information are in one-to-one correspondence with indexes of the plurality of pieces of beam configuration information, and the indexes of the plurality of pieces of beam configuration information comprise the index of the first beam configuration information.

5. The method according to any one of claims 1 to 4, wherein the method further comprises:
sending, by the first network device, second information to the terminal device, wherein the second information comprises at least one of the following information:
the RNTI, a detection periodicity, an offset slot, a detected symbol, an aggregation level, and a quantity of physical downlink control channel PDCCH candidate sets.

6. The method according to claim 1, wherein the sending, by the first network device, the first information to a terminal device by using downlink control information DCI and a media access control MAC control element CE comprises:
sending, by the first network device, a plurality of pieces of beam configuration information to the terminal device by using a radio resource control RRC message, wherein the plurality of pieces of beam configuration information are in one-to-one correspondence with indexes of the plurality of pieces of beam configuration information, and the indexes of the plurality of pieces of beam configuration information comprise an index of the first beam configuration information;
sending, by the first network device, third information to the terminal device by using the MAC CE, wherein the third information indicates to activate second beam configuration information, and the second beam configuration information is a subset of the plurality of pieces of beam configuration information; and
sending, by the first network device, the first information to the terminal device by using the DCI, wherein the first beam configuration information indicated by the first information belongs to the second beam configuration information.

7. The method according to any one of claims 1 to 6, wherein the first beam is a beam formed by a synchronization signal block SSB, and the first beam configuration information further comprises an SSB index; or
the first beam is a beam formed by a channel state information reference signal CSI-RS, and the first beam configuration information further comprises a CSI-RS resource identifier CSI-RS resource ID or a CSI-RS resource set identifier CSI-RS resource set ID.

8. The method according to any one of claims 1 to 7, wherein the method further comprises:
obtaining, by the first network device, first capability information of the terminal device, wherein the first capability information indicates that the terminal device has at least one of the following capabilities:
supporting dynamic beam configuration;
supporting MAC CE-based dynamic beam configuration; or
supporting DCI-based dynamic beam configuration.

9. The method according to claim 8, wherein the method further comprises:
sending, by the first network device, first capability enquiry information to the terminal device, wherein the first capability enquiry information indicates the terminal device to report the first capability information of the terminal device.

10. The method according to any one of claims 1 to 9, wherein the method further comprises:
obtaining, by the first network device, third beam configuration information, wherein the third configuration information is beam configuration information recommended by the terminal device.

11. The method according to claim 10, wherein the method further comprises:
sending, by the first network device, first indication information to the terminal device, wherein the first indication information indicates the terminal device to send the third beam configuration information.

12. The method according to any one of claims 1 to 10, wherein the method further comprises:
sending, by the first network device, fourth information to a second network device, wherein the fourth information indicates the third beam configuration information, and the third beam configuration information is determined based on the first beam configuration information.

13. The method according to any one of claims 1 to 12, wherein the first beam configuration information is from the second network device or an operation, administration, and maintenance OAM network element.

14. The method according to claim 12 or 13, wherein the fourth information is carried in a cell activation request message or a resource status update request message.

15. The method according to any one of claims 12 to 14, wherein the method further comprises:
receiving, by the first network device, fourth beam configuration information from the second network device, wherein the fourth beam configuration information indicates beam configuration information applied by the second network device.

16. A communication method, comprising:
receiving, by a terminal device, first information from a first network device by using downlink control information DCI and/or a media access control MAC control element CE; and
determining, by the terminal device, first beam configuration information based on the first information, wherein the first beam configuration information comprises identifier information of a first beam and periodicity information of the first beam.

17. The method according to claim 16, wherein the first information comprises an index of the first beam configuration information, and the index of the first beam configuration information corresponds to the first beam configuration information; or
the first information comprises the identifier information of the first beam and the periodicity information of the first beam.

18. The method according to claim 16 or 17, wherein cyclic redundancy check CRC of the DCI and/or the MAC CE is scrambled by using a radio network temporary identifier RNTI.

19. The method according to any one of claims 16 to 18, wherein the method further comprises:
receiving, by the terminal device, a radio resource control RRC message from the first network device, wherein the RRC message comprises a plurality of pieces of beam configuration information, the plurality of pieces of beam configuration information are in one-to-one correspondence with indexes of the plurality of pieces of beam configuration information, and the indexes of the plurality of pieces of beam configuration information comprise the index of the first beam configuration information.

20. The method according to any one of claims 16 to 19, wherein the method further comprises:
receiving, by the terminal device, second information from the first network device, wherein the second information comprises at least one of the following information:
the RNTI, a detection periodicity, an offset slot, a detected symbol, an aggregation level, and a quantity of physical downlink control channel PDCCH candidate sets.

21. The method according to claim 16, wherein the receiving, by a terminal device, first information from a first network device by using downlink control information DCI and a media access control MAC control element CE comprises:
receiving, by the terminal device, a radio resource control RRC message from the first network device, wherein the RRC message comprises a plurality of pieces of beam configuration information, the plurality of pieces of beam configuration information are in one-to-one correspondence with indexes of the plurality of pieces of beam configuration information, and the indexes of the plurality of pieces of beam configuration information comprise an index of the first beam configuration information;
receiving, by the terminal device, the MAC CE from the first network device, wherein the MAC CE comprises third information, the third information indicates to activate second beam configuration information, and the second beam configuration information is a subset of the plurality of pieces of beam configuration information; and
receiving, by the terminal device, the DCI from the first network device, wherein the DCI comprises the first information, and the first beam configuration information indicated by the first information belongs to the second beam configuration information.

22. The method according to any one of claims 16 to 21, wherein the first beam is a beam formed by a synchronization signal block SSB, and the first beam configuration information further comprises an SSB index; or
the first beam is a beam formed by a channel state information reference signal CSI-RS, and the first beam configuration information further comprises a CSI-RS resource identifier CSI-RS resource ID or a CSI-RS resource set identifier CSI-RS resource set ID.

23. The method according to any one of claims 16 to 22, wherein the method further comprises:
sending, by the terminal device, first capability information to the first network device, wherein the first capability information indicates that the terminal device has at least one of the following capabilities:
supporting dynamic beam configuration;
supporting MAC CE-based dynamic beam configuration; or
supporting DCI-based dynamic beam configuration.

24. The method according to any one of claims 16 to 23, wherein the method further comprises:
sending, by the terminal device, third beam configuration information to the first network device, wherein the third configuration information is beam configuration information recommended by the terminal device.

25. A communication apparatus, comprising:
a memory, configured to store computer instructions; and
a processor, configured to execute the computer instructions stored in the memory, to enable the communication apparatus to perform the method according to any one of claims 1 to 15, or
enable the communication apparatus to perform the method according to any one of claims 16 to 24.

26. A computer-readable storage medium, wherein the computer-readable storage medium stores a computer program; and when the computer program is executed by a communication apparatus, the method according to any one of claims 1 to 24 is performed.

27. A chip system, comprising a processor, configured to invoke a computer program or instructions from a memory and run the computer program or the instructions, to enable a communication apparatus in which the chip system is installed to implement the method according to any one of claims 1 to 24.
